# EUROPEAN PATENT APPLICATION

(11) **EP 4 570 589 A1**
(43) Date of publication of application: **18.06.2025**
(21) Application number: 23852460.7
(22) Date of filing: 02.08.2023
(51) Int. Cl.: B60N 2/56, A47C 7/30, A47C 7/62, A47C 7/74, A47C 27/00, B60N 2/68, B60N 2/70, B60N 2/90

(54) **VEHICLE SEAT**

(30) Priority: 08.08.2022 US 202263395958 P; 03.03.2023 JP 2023032793; 29.03.2023 JP 2023053450; 29.03.2023 JP 2023053451; 29.03.2023 JP 2023053452; 29.03.2023 JP 2023053453
(71) Applicant: TS Tech Co., Ltd., Asaka-shi, Saitama 351-0012 (JP)
(72) Inventor: MIZOI, Kensuke, Shioya-gun, Tochigi 329-1217 (JP); TAKANOHASHI, Hiroshi, Shioya-gun, Tochigi 329-1217 (JP)
(74) Representative: Plougmann Vingtoft a/s
(86) International application number: PCT/JP2023/028297
(87) International publication number: WO 2024/034493

(57) **Abstract**

A vehicle seat configured to restrain vibrations when a blower is operated is provided. The vehicle seat includes a seat frame F having left and right side first side frames 11 disposed laterally apart from each other, a first pressure-receiving member 30 configured to support an occupant, the first pressure-receiving member 30 disposed between the left and right first side frames 11, and a blower 110 mounted on the first pressure-receiving member 30. The first pressure-receiving member includes an elastic member (plastic member 31) having elasticity, and the blower 110 is mounted on the elastic member.

## Description

### TECHNICAL FIELD

This disclosure relates to a vehicle seat.

### BACKGROUND ART

A car seat having left and right side frames, a front frame connected to front end portions of the left and right side frames, a rear frame connected to rear end portions of the left and right side frames, and a support panel supporting the occupant is known in the art (for example, JP 2012-197032A). The support panel is made of a metal sheet member by a bending process, and is mounted to bridge the front frame and the rear frame. A blower is fixed to a back surface of the support panel.

### SUMMARY OF INVENTION

It would be desirable that vibrations caused by operation of the blower are not easily transmitted to the occupant in a vehicle seat.

Accordingly, the present disclosure provides a vehicle seat that can restrain vibration when the blower is operated.

A vehicle seat comprises a seat frame having left and right side frames disposed laterally apart from each other, a pressure-receiving member configured to support an occupant and disposed between the left and right side frames, and a blower mounted on the pressure-receiving member. The pressure-receiving member includes an elastic member having elasticity, and the blower is mounted on the elastic member.

Since the pressure-receiving member includes the elastic member having elasticity and the blower is mounted on the elastic member, vibrations caused by operation of the blower can be restrained.

The pressure-receiving member may be configured to have a shape of a plate.

Since the pressure-receiving member has a shape of a plate, it is easier to mount the blower on the pressure-receiving member.

The elastic member may be configured of elastomer.

Since the elastic member on which the blower is mounted is made of elastomer, vibrations caused by operation of the blower can be efficiently restrained.

The pressure-receiving member may be configured to comprise the elastic member and a wire covered by the elastic member.

The pressure-receiving member may be configured to comprise a mounting portion configured to mount members other than the blower to the pressure-receiving member, and the blower is disposed in a position that does not overlap a position of the mounting portion as viewed from an occupant side.

Since the blower is disposed in the position that does not overlap the position of the mounting portion as viewed from the occupant side, the blower is less likely to get in the way when members other than the blower are mounted on the mounting portion.

The vehicle seat may be configured to comprise a pad that covers the seat frame, and includes an air passage formed therein, and a duct that connects the blower and the air passage, wherein the duct is disposed in a position that does not overlap a position of the mounting portion as viewed from the occupant side.

Since the duct is disposed in a position that does not overlap the position of the mounting portion as viewed from the occupant side, the duct is less likely to get in the way when members other than the blower are mounted on the mounting portion.

The vehicle seat may be configured to comprise a pad that covers the seat frame and includes an air passage formed therein, and a duct that connects the blower and the air passage, wherein the blower is disposed on a side of the pressure-receiving member opposite to an occupant side of the pressure-receiving member, the pressure-receiving member has a through hole, and the duct extends through the through hole from the side of the pressure-receiving member opposite to the occupant side of the pressure-receiving member toward the occupant side.

Since the duct extends through the through hole from the side of the pressure-receiving member opposite to the occupant side of the pressure-receiving member toward the occupant side, the duct can be disposed in a compact manner.

The side frames may be configured to be elongate in a direction perpendicular to a lateral direction, and a position of the blower in a longitudinal direction may overlap a position of the through hole in the longitudinal direction of the side frames.

Since the position of the blower in the longitudinal direction of the side frames overlaps the position of the through hole of the pressure-receiving member in the longitudinal direction of the side frames, a distance between the blower and the through hole can be made shorter. Thus, the duct can be made shorter.

The vehicle seat may be configured such that the side frames are configured to be elongate in a direction perpendicular to the lateral direction, wherein the vehicle seat may be configured to further comprise side frame covers covering at least lateral inner sides of end portions of the side frames on one side in a longitudinal direction and a position of the blower in the longitudinal direction is closer, than the side frame covers, to end portions of the side frames on another side in the longitudinal direction.

Since the position of the blower in the longitudinal direction is closer, than the side frame covers, to the end portions of the side frames on the another side in the longitudinal direction, the blower can be disposed apart from the side frame cover.

The vehicle seat may be configured to comprise a pad that covers the seat frame and includes an air passage formed therein, and a duct that connects the blower and the air passage, wherein the side frames are elongate in a direction perpendicular to a lateral direction, wherein the vehicle seat further comprises side frame covers covering at least lateral inner sides of end portions on one side of the side frames in a longitudinal direction, and a position in the longitudinal direction of a portion connecting the duct and the air passage is closer, than the side frame covers, to end portions of the side frames on another side in the longitudinal direction.

Since the position in the longitudinal direction of the portion connecting the duct and the air passage is closer, than the side frame covers, to end portions of the side frames on the another side in the longitudinal direction, the portion connecting the duct and the air passage can be disposed apart from the side frame covers.

The vehicle seat may be configured such that the side frames are configured to be elongate in a direction perpendicular to a lateral direction, wherein the vehicle seat may be configured to further comprise side frame covers covering at least lateral inner sides of end portions of the side frames on one side in a longitudinal direction, and a position of the blower in the longitudinal direction overlaps a position of the side frame covers in the longitudinal direction.

Since the position of the blower in the longitudinal direction overlaps the position of the side frame covers in the longitudinal direction, the blower can be disposed within a length of the side frame cover in the longitudinal direction of the side frame.

The vehicle seat may be configured such that the blower is configured to be mounted directly on the elastic member.

Since the blower is mounted directly on the elastic member, the number of components can be reduced.

When a sensor configured to detect an occupant is to be provided on a vehicle seat, it would be desirable to compactly dispose the sensor and a blower.

The present disclosure provides, a vehicle seat on which the sensor and the blower can be disposed compactly.

A vehicle seat comprises a seat frame having left and right side frames disposed laterally apart from each other, a pressure-receiving member configured to support an occupant and disposed between the left and right side frames, a sensor configured to detect an occupant, and a blower. The sensor is mounted on an occupant side surface of the pressure-receiving member and the blower is mounted on a surface of the pressure-receiving member opposite to the occupant side of the pressure-receiving member.

Since the sensor is mounted on the occupant side surface of the pressure-receiving member and the blower is mounted on the surface of the pressure-receiving member opposite to the occupant side of the pressure-receiving member, the sensor and the blower can be disposed compactly.

The vehicle seat may be configured such that the sensor is disposed in a position that overlaps a position of the blower as viewed from the occupant side.

Since the sensor is disposed in the position that overlaps the position of the blower as viewed from the occupant side, the sensor and the blower can be disposed more compactly.

The vehicle seat may be configured to comprise a pad that covers the seat frame, and includes an air passage formed therein, and a duct that connects the blower and the air passage, wherein the side frames are elongate in a direction perpendicular to a lateral direction and a position of a portion connecting the duct and the air passage in a longitudinal direction of the side frames overlaps a position of the sensor in the longitudinal direction of the side frames.

Since the portion connecting the duct and the air passage overlaps the position of the sensor in a longitudinal direction of the side frames, the sensor and the portion connecting the duct and the air passage can be disposed compactly in the longitudinal direction of the side frames.

The vehicle seat may be configured such that the portion connecting the duct and the air passage is disposed on one side of a lateral central portion of the pressure-receiving member in the lateral direction, and the sensor may be disposed on another side of the lateral central portion of the pressure-receiving member in the lateral direction.

Since the portion connecting the duct and the air passage is disposed on the one side and the sensor is disposed on the another side with respect to the lateral central portion of the pressure-receiving member, increase in size of the pressure-receiving member can be restrained.

The vehicle seat may be configured such that the sensor is disposed in a position that does not overlap a position of the duct as viewed from the occupant side.

Since the sensor is disposed in the position that does not overlap the position of the duct as viewed from the occupant side, the duct can be made shorter. The duct can be made in a simpler shape.

The vehicle seat may be configured such that the sensor is disposed in a position that does not overlap a position of the blower as viewed from the occupant side.

Since the sensor is disposed in the position that does not overlap the position of the blower as viewed from the occupant side, vibrations caused by operation of the blower can be restrained from interfering with the detection of the sensor.

The vehicle seat may be configured such that a position of the sensor in a lateral direction does not overlap a position of the blower in the lateral direction.

Since the position of the sensor in the lateral direction does not overlap the position of the blower in the lateral direction, the sensor can be disposed further apart from the blower.

The vehicle seat may be configured such that the side frames are elongate in a direction perpendicular to a lateral direction, wherein the vehicle seat further comprises side frame covers covering at least lateral inner sides of end portions of the side frames on one side in the longitudinal direction, a position of the blower in the longitudinal direction overlaps a position of the side frame covers in the longitudinal direction, and a position of the sensor in the longitudinal direction is closer, than the side frame covers, to end portions of the side frames on another side in the longitudinal direction.

Since the position of the blower in the longitudinal direction overlaps the position of the side frame covers in the longitudinal direction and the position of the sensor in the longitudinal direction is closer, than the side frame covers, to end portions of the side frames covers on the another side in the longitudinal direction, the sensor can be disposed more apart from the blower.

The sensor may, for example, be a pressure sensor.

In the vehicle seat, it would be desirable to compactly dispose a pressure-receiving member configured to support an occupant and a blower.

The present disclosure provides a vehicle seat on which the pressure-receiving member and the blower can be disposed compactly.

A vehicle seat comprises a seat frame including left and right side frames disposed laterally apart from each other and a pair of connecting frames connecting the left and right frames and disposed apart from each other in a direction perpendicular to a lateral direction, a pressure-receiving member configured to support an occupant and disposed between the left and right side frames, and a blower mounted to the pressure-receiving member, wherein the pressure-receiving member comprises a plastic member having a shape of a plate, a first reinforcing wire configured to bridge the left and right side frames or the pair of connecting frames in a bridging direction and covered by the plastic member, wherein the blower is disposed in a position that does not overlap a position of the first reinforcing wire as viewed from an occupant side.

Since the blower is disposed in the position that does not overlap the position of the first reinforcing wire as viewed from the occupant side, the pressure-receiving member and the blower can be disposed compactly in a direction in which the pressure-receiving member is opposed to an occupant.

The vehicle seat may be configured such that the first reinforcing wire comprises a bent portion and the position of the blower in the bridging direction overlaps a position of the bent portion in the bridging direction.

Since the position of the blower in the bridging direction overlaps the position of the bent portion in the bridging direction, the blower can be mounted in a close proximity of the bent portion of the first reinforcing wire which has a high rigidity. Thus, the mounting strength of the blower can be enhanced.

The vehicle seat may be configured to comprise a controller configured to control the blower, and mounted on the pressure-receiving member with a position of the controller in the bridging direction overlapping a position of the bent portion in the bridging direction

Since the position of the blower in the bridging direction overlaps the position of the bent portion in the bridging direction, the controller can be mounted in a close proximity of the bent portion of the first reinforcing wire which has high rigidity. Thus, the mounting strength of the controller can be enhanced.

The vehicle seat may be configured such that the controller is disposed in a position that does not overlap a position of the first reinforcing wire as viewed from the occupant side.

Since the controller is disposed in a position that does not overlap the position of the first reinforcing wire as viewed from the occupant side, the pressure-receiving member and the controller can be disposed compactly in a direction in which the pressure-receiving member is opposed to an occupant.

The vehicle seat may be configured such that the first reinforcing wire includes a first wire and a second sire disposed apart from each other in a direction perpendicular to the bridging direction, and the blower is disposed between the first wire and the second wire as viewed from the occupant side.

Since the blower is disposed between the first wire and the second sire as viewed from the occupant side, the blower can be mounted to a portion of the pressure-receiving member between the first wire and the second wire which is reinforced by the first wire and the second wire. Thus, the mounting strength of the blower can be enhanced.

The vehicle seat may be configured to comprise a pad that covers the seat frame, and includes an air passage formed therein, and a duct configured to connect the blower and the air passage, wherein the pressure-receiving member comprises a second reinforcing wire extending in a direction perpendicular to the first reinforcing wire as viewed from the occupant side, the second reinforcing wire being covered by the plastic member and a position of a portion connecting the duct and the air passage is closer to the second reinforcing wire than to the blower as viewed from the occupant side.

Since the position of the portion connecting the duct and the air passage is closer to the second reinforcing wire than to the blower as viewed from the occupant side, the portion connecting the duct and the air passage can be disposed closer to a portion of the pressure-receiving member reinforced by the second reinforcing wire.

The vehicle seat may be configured to comprise a controller configured to control the blower and mounted on the pressure-receiving member, wherein the first reinforcing wire bridges the pair of connecting frames, the first reinforcing wire includes a central wire disposed at a lateral central portion of the pressure-receiving member, the blower is disposed on one side of the central wire in the lateral direction, and the controller is disposed on another side of the central wire in the lateral direction.

Since the blower is disposed on one side of the central wire in the lateral direction and the controller is disposed on the another side of the central wire in the lateral direction, positions for mounting the blower and the controller can be more easily secured.

The vehicle seat may be configured such that the first reinforcing wire includes a first side wire disposed on the one side of the central wire in the lateral direction and a second side wire disposed on the another side of the central wire in the lateral direction, wherein the blower is disposed between the central wire and the first wire as viewed from the occupant side and the controller is disposed between the central wire and the second side wire as viewed from the occupant side.

Since the blower is disposed between the central wire and the first wire as viewed from the occupant side and the controller is disposed between the central wire and the second side wire as viewed from the occupant side, the mounting strength of the blower and the controller can be enhanced.

The vehicle seat may be configured to comprise a pad that covers the seat frame and includes an air passage formed therein, and a duct that connects the blower and the air passage, wherein the blower is disposed on a side of the pressure-receiving member opposite to an occupant side of the pressure-receiving member, the plastic member has a through hole, the duct extends through the through hole from the side of the pressure-receiving member opposite to the occupant side of the pressure-receiving member toward the occupant side, the pressure-receiving member comprises a second reinforcing wire extending in a direction perpendicular to the first reinforcing wire as viewed from the occupant side and covered by the plastic member, and the second reinforcing wire extends along a part of an edge of the through hole.

Since the second reinforcing wire extends along the part of the edge of the through hole of the plastic member, the edge of the through hole of the plastic member can be reinforced.

The vehicle seat may be configured such that the plastic member comprises a mesh portion having a web-shaped structure.

Since the plastic member comprises the mesh portion, cushioning properties of the pressure-receiving member can be enhanced. The weight of the pressure-receiving member can be reduced.

The vehicle seat may be configured such that the plastic member is made of elastomer.

Since the plastic member is made of elastomer, vibrations caused by operation of the blower can be restrained.

In the vehicle seat, it would be desirable to enhance the mounting strength of the blower.

In the present disclosure, a vehicle seat in which the mounting strength of the blower can be enhanced is provided.

A vehicle seat comprises a seat frame having left and right side frames disposed laterally apart from each other, a pressure-receiving member configured to support an occupant and disposed between the left and right side frames, and a blower mounted on the pressure-receiving member. The pressure-receiving member comprises a blower mounting portion having a shape of a plate and having a first through hole that is engaged with an engaging portion configured to mount the blower to the pressure-receiving member, and a thick portion provided on at least a part of a periphery of the blower mounting portion in contact with a part of the blower mounting portion and protruding at least further, than the blower mounting portion, toward an occupant side.

Since the periphery of the blower mounting portion comprises the thick portions, the strength of the blower mounting portion can be increased and the mounting strength can be enhanced. Since the periphery of the blower mounting portion comprises the thick portion, the amount of protrusion toward the occupant side of the engaging portion engaged with the blower mounting portion can be made relatively smaller.

The vehicle seat may be configured to comprise a mounting member configured to mount the blower on the pressure-receiving member and comprising the engaging portion that is engaged with the first through hole from the occupant side toward a side opposite to the occupant side, wherein an end portion of the engaging portion protrudes further, than the blower mounting portion, toward the side opposite to the occupant side.

Since the end portion of the engaging portion that engages the blower mounting portion protrudes further, than the blower mounting portion, toward the side opposite to the occupant side, the amount of protrusion of the mounting member toward the occupant side can be made smaller.

The vehicle seat may be configured such that the thick portion protrudes further, than the mounting member, toward the occupant side.

Since the thick portion protrudes further, than the mounting member toward the occupant side, the mounting member can be made so that it does not protrude further toward the occupant side than the thick portion.

The vehicle seat may be configured such that the thick portion includes a first thick portion and a second thick portion, wherein the first thick portion and the second thick portion protrude further, than the blower mounting portion toward the side opposite to the occupant side, the blower mounting portion is disposed between the first thick portion and the second thick portion, the blower comprises a plate-shaped to-be-mounted portion having a second through hole to which the engaging portion is engaged, and the to-be-mounted portion is disposed in contact with the first thick portion and the second thick portion on the side opposite to the occupant side with respect to the blower mounting portion.

Since the to-be-mounted portion of the blower is disposed in contact with the first thick portion and the second thick portion, rattling of the to-be-mounted portion can be restrained.

The vehicle seat may be configured such that the blower comprises a protrusion protruding from the to-be-mounted portion toward the blower mounting portion, the protrusion contacting the blower mounting portion.

Since the blower comprises a protrusion in contact with the blower mounting portion, rattling of the to-be-mounted portion can be restrained by the first thick, portion, the second thick portion, and the protrusion.

The vehicle seat may be configured such that the blower mounting portion is provided on one side in the lateral direction of a lateral central portion of the pressure-receiving member.

Since the blower mounting portion is provided on the one side in the lateral direction of the lateral central portion of the pressure-receiving member, the blower can be disposed on the one side in the lateral direction of the pressure-receiving member, and space for mounting members other than the blower can be secured on the another side.

The vehicle seat may be configured such that the pressure-receiving member comprises a mesh portion having a web-shaped structure, wherein the blower mounting portion is disposed inside a mesh of the mesh portion to block the mesh and the thick portion is a strand of the mesh portion.

Since the pressure-receiving member comprises the mesh portion on which the blower mounting portion is provided, cushioning properties of the pressure-receiving member can be enhanced by the mesh portion while providing the blower mounting portion on the pressure-receiving member.

The vehicle seat may be configured such that the pressure-receiving member has a frame portion provided to surround the mesh portion, wherein the blower mounting portion is provided in contact with the frame portion.

Since the blower mounting portion is provided in contact with the frame portion, strength of the blower mounting portion can be further enhanced; thus, the mounting strength of the blower can be further enhanced.

The vehicle seat may be configured such that the blower comprises the engaging portion.

Since the blower comprises the engaging portion, the number of components can be reduced.

JP 2018-161912 A1 discloses a vehicle seat comprising a seat frame (frame member in the document) with a pressure-receiving member in which a suspension wire is insert molded in a plastic member having a shape of a plate, in order to support an occupant. Such a pressure-receiving member can provide moderate flexibility, compared to pressure-receiving member made of metal sheet, and can provide moderate rigidity since the pressure-receiving member is reinforced by suspension wires

In recent years, there is a demand for even thinner and lighter vehicle seats. Further, to provide cushioning properties, not only to the pad material but also to the pressure-receiving member, soft elastomer resin are being used for pressure-receiving members.

However, when a pressure-receiving member is formed from soft elastomer resins, the pressure-receiving member may flex by motion such as acceleration or deceleration of a car in a direction of acceleration or deceleration, for example, in a front-rear direction of the vehicle seat, and restraining such flexing is an issue.

Thus, the present disclosure provides a vehicle seat comprising a pressure-receiving member that can restrain flexing in a predetermined direction.

A vehicle seat of the present disclosure comprises a seat frame as a frame work and a pressure-receiving member mounted on the seat frame and configured to support an occupant. The pressure-receiving member comprises a plurality of linear portions that form a mesh-shaped support surface formed by an elastically deformable elastic member, and the plurality of linear portions include a first arc portion formed in a shape of an arc and a second arc portion formed in a shape of an arc and intersects the first arc portion.

Since the first arc portion and the second arc portion formed in arc shapes are provided, the pressure-receiving member, for example, can withstand a load exerted from a direction opposite to a convex direction of the arc, and flexing of the pressure-receiving material can be restrained. Since the first arc portion and the second arc portion intersect, the pressure-receiving member can withstand a load exerted from a plurality of directions in a close proximity of an intersection of the first arc portion and the second arc portion, and in addition, can restrain the pressure-receiving member from flexing in a predetermined direction.

In the above-described configuration, the plurality of linear portions may comprise a straight portion extending straight in a front-rear direction of the seat or an up-down direction of the seat. Since the plurality of linear portions comprise a straight portion extending straight in the front-rear direction of the vehicle seat or the up-down direction of the vehicle seat, the pressure-receiving member can be restrained from stretching (flexing) in the front-rear direction of the seat or the up-down direction of the seat when the occupant is seated.

In other words, the pressure-receiving member is restrained from stretching in the front-rear direction of the vehicle seat when the pressure-receiving member is provided in the seat cushion, and pressure-receiving member is restrained from stretching in the up-down direction of the vehicle seat when the pressure-receiving member is provided in the seat back.

In the above-described configuration, the straight portion is preferably intersecting with the first arc portion.

Since the straight portion and the first arc portion of the linear portions intersect, the stretching (flexing) of the pressure-receiving member when the occupant is seated can be restrained more efficiently.

In the above-described configuration, the straight portion is preferably intersecting with the second arc portion.

Since the straight portion and the second arc portion of the linear portions intersect, the stretching (flexing) of the pressure-receiving member when the occupant is seated can be restrained more efficiently.

In the above-described configuration, a first center of an arc forming the first arc portion and a second center of an arc forming the second arc portion are preferably located outside of an area occupied by the pressure-receiving member.

Since the first center of the first arc portion and the second center of the second arc portion are located outside of the area occupied by the pressure-receiving member, a radius of curvature of the arcs can be made larger compared to an alternative configuration in which the centers are disposed inside of the area occupied by the pressure-receiving member. In other words, the first arc portion and the second arc portion can be made in a shape of a fan having a gentle arc such that the flexing of the pressure-receiving member can be further restrained.

In the above-described configuration, the plurality of linear portions preferably comprise a third arc portion formed in a shape of an arc that intersects the first arc portion and having a third center different from a second center of an arc forming the second arc portion, wherein the third arc portion intersects the straight portion.

Since the linear portions comprise the third arc portion having a third center different from the second center of the second arc portion, the directions in which the pressure-receiving member can withstand the load exerted on the pressure-receiving member increase, and the flexing of the pressure-receiving member can be further restrained. Since the third arc portion intersects the straight portion, stretching (flexing) of the pressure-receiving member when the occupant is seated can be reduced more efficiently.

In the above-described configuration, the pressure-receiving member preferably comprises a pressure sensor configured to detect a seated state of the occupant and a lateral wire extending in a width direction of the seat, and the lateral wire is preferably disposed in a close proximity of the pressure sensor.

Since the lateral wire is disposed in a close proximity of the pressure sensor, the portion of the pressure-receiving member in close proximity of the pressure sensor can be restrained from bending more than necessary and the pressure-receiving member can be restrained from not operating properly when the occupant is seated.

In the above-described configuration, the pressure-receiving member preferably comprises a longitudinal wire perpendicular to the lateral wire and extending in a front-rear direction of the seat or the up-down direction of the seat.

Since the pressure-receiving member comprises the longitudinal wire extending in a front-rear direction of the vehicle seat or the up-down direction of the vehicle seat, stretching (flexing) of the pressure-receiving member in the front-rear direction of the seat or the up-down direction of the seat can be reduced.

In the above-described configurations, the pressure sensor is preferably disposed in a close proximity of an intersection of the lateral wire and the longitudinal wire.

Since the pressure sensor is disposed in a close proximity of the intersection of the lateral wire and the longitudinal wire, stretching of the pressure-receiving member can be restrained and malfunctions of the pressure sensor when the occupant is seated can be reduced.

In the above-described configuration, the vehicle seat preferably further comprises a duct configured to deliver air from the blower toward the occupant side, wherein the pressure-receiving member comprises a lateral wire extending in width direction of the seat and a longitudinal wire perpendicular to the lateral wire and extending in a front-rear direction or an up-down direction, and the pressure-receiving member has a through hole into which the duct is inserted, and that is disposed in a close proximity of an intersection of the lateral wire and the longitudinal wire.

Since the pressure-receiving member has the through hole into which the duct is inserted, an air outlet of the duct can be disposed on the occupant side. Since the through hole is disposed in a close proximity of the intersection of the lateral wire and the longitudinal wire, the structure surrounding the through hole can be reinforced.

### BRIEF DESCRIPTION OF DRAWINGS

[FIG. 1] is a perspective view of a vehicle seat according to a first embodiment.
[FIG. 2] is a perspective view of a seat frame.
[FIG. 3] is a perspective view of a first pressure-receiving member.
[FIG. 4] is an illustration of the first pressure-receiving member as viewed from above.
[FIG. 5] is an illustration of the first pressure-receiving member as viewed from the left.
[FIG. 6] is an illustration of a seat cushion frame, the first pressure-receiving member, and a side frame cover as viewed from above.
[FIG. 7] is a perspective view of a blower.
[FIG. 8] is a cross-sectional view showing a mounting structure of the blower.
[FIG. 9] (a) is an illustration of the first pressure-receiving member, the blower, a duct, an ECU, and a sensor as viewed from above, and FIG. 9 (b) is an illustration of the first pressure-receiving member, the blower, the duct, the ECU, and the sensor as viewed from below.
[FIG. 10] is a cross-sectional view of the seat cushion.
[FIG. 11] (a) and (b) are cross-sectional views of the blower mounting structure according to a modification of the first embodiment.
[FIG. 12] is an illustration of a seat cushion frame, a first pressure-receiving member, and a side cover frame of a vehicle seat according to a second embodiment as viewed from above.
[FIG. 13] (a) is an illustration of the pressure-receiving member, the blower, the duct, the ECU, and the sensor as viewed from above, and FIG. 13 (b) is an illustration of the pressure-receiving member, the blower, the duct, the ECU, and the sensor as viewed from below.
[FIG. 14] (a) is an illustration of the first pressure-receiving member of the vehicle seat according to a first modification as viewed from below, and FIG. 14 (b) is a cross-sectional view taken along A-A of FIG. 14 (a).
[FIG. 15] (a) is an illustration of the first pressure-receiving member of the vehicle seat according to a second modification as viewed from below, and FIG. 15 (b) is a cross-sectional view taken along B-B of the first pressure-receiving member of FIG. 15 (a).
[FIG. 16] is an illustration of a seat cushion of a car seat according to a third modification as viewed from above.
[FIG. 17] (a) is an illustration of a seat cushion of a car seat according to a fourth modification as viewed from above, and FIG. 17 (b) is an illustration of a seat cushion of a car seat according to a fifth modification as viewed from above.
[FIG. 18] (a) is an illustration of a seat cushion of a car seat according to a sixth modification as viewed from above, and FIG. 18 (b) is an illustration of a seat cushion of a car seat according to a seventh modification as viewed from above.
[FIG. 19] is an illustration of a seat cushion of a car seat according to an eighth modification as viewed from above.
[FIG. 20] (a) is an illustration of a of a seat cushion of a car seat according to a ninth modification as viewed from above, and FIG. 20 (b) is a perspective view of the ECU, a moving mechanism, and a support member.
[FIG. 21] is an illustration of a seat cushion of a car seat according to a tenth modification as viewed from above.
[FIG. 22] is a perspective view of an exterior of a vehicle seat according to the present invention as viewed from an obliquely frontward direction.
[FIG. 23] is a perspective view of a seat frame of the vehicle seat.
[FIG. 24] is a top view of a pressure-receiving member mounted on a cushion frame.
[FIG. 25] is a top view showing linear portions of the pressure-receiving member.
[FIG. 26] is an illustration showing the concept of the linear portions.
[FIG. 27] is a cross-sectional view taken along VI-VI of FIG. 24.
[FIG. 28] is a cross-sectional view taken along VII-VII of FIG. 24.
[FIG. 29] is an illustration showing another example of wires provided on the pressure-receiving member.
[FIG. 30] is an illustration showing another example of the wires provided on the pressure-receiving member.

### DESCRIPTION OF EMBODIMENTS

Next, a first embodiment will be described. In this description, the front/rear (frontward/rearward), left/right (leftward/rightward; lateral), and up/down (upward/downward) directions are designated with reference to the front/rear, left/right and up/down directions for a person seated on a seat (occupant).

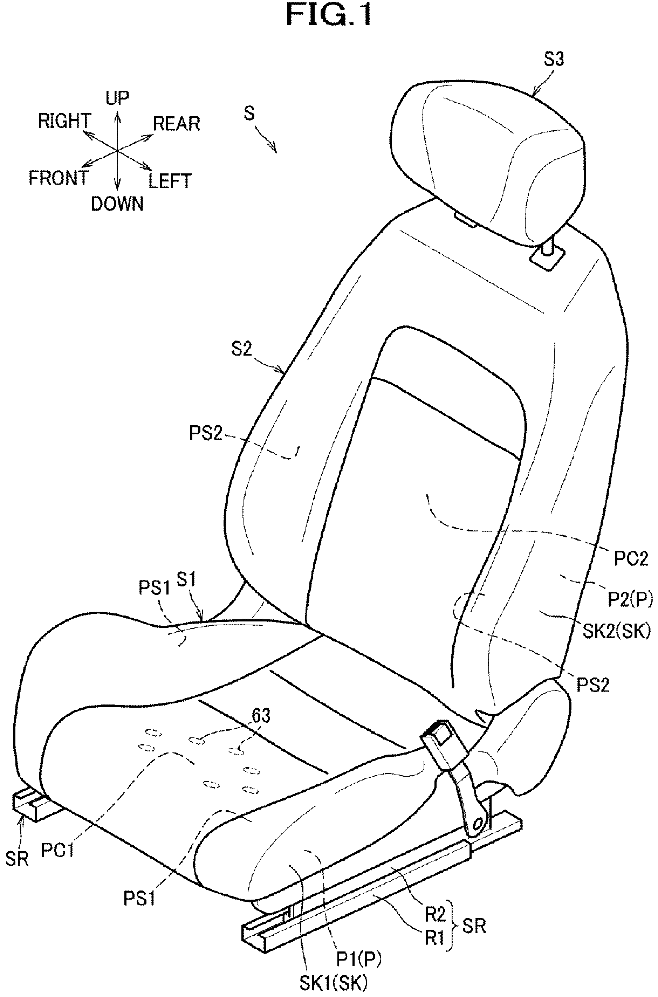

As shown in FIG. 1, a vehicle seat according to this embodiment is configured as a car seat S to be installed in an automobile as a vehicle. The car seat S comprises a seat cushion S1, a seat back S2, and a headrest S3.

The car seat S further comprises a moving mechanism SR that allows the seat cushion S1 to move with respect to a floor of the automobile. The moving mechanism SR comprises left and right lower rails R1 that are fixed to the floor of the automobile, and left and right upper rails R2 that are engaged with the lower rails R1 in a manner that allow the upper rails R2 to slide in a front-rear direction. The seat cushion S1 is fixed to the left and right upper rails R2. As a result, the seat cushion S1 (car seat S) is slidable in the front-rear direction with respect to the floor of the automobile.

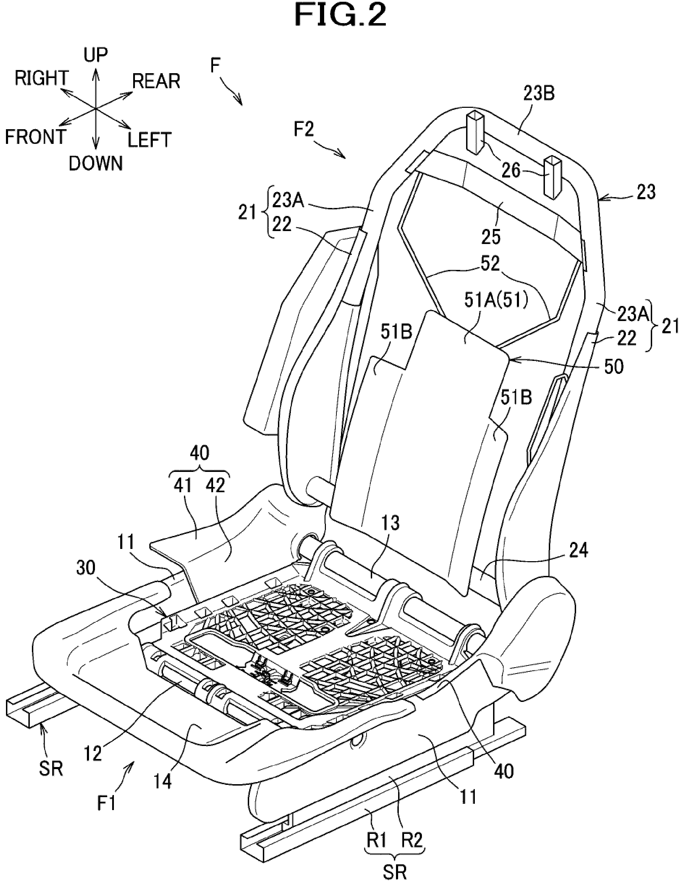

As shown in FIG. 1 and FIG. 2, the car seat S comprises a seat frame F, a pad P that covers the seat frame F, and an outer covering SK that covers the seat frame F and the pad P.

The seat frame F comprises a seat cushion frame F1 that is a frame of the seat cushion S1, and a seat back frame F2 that is a frame of the seat back S2.

The pad P is, for example, made of foamed plastic such as urethane foam, and includes a seat cushion pad P1 that covers the seat cushion frame F1 and a seat back pad P2 that covers the seat back frame F2. The seat cushion pad P1 has a first central portion PC1 and left and right first side portions PS1 that are provided on the left and right of the first central portion PC1 and project further upward of the first central portion PC1. The seat back pad P2 has a second central portion PC2 and second side portions PS2 that are provided on the left and right of the second central portion PC2 and project further frontward of the second central portion PC2.

The outer covering SK is, for example, made of leather, fabric, etc., and includes a seat cushion outer covering SK1 covering the seat cushion frame F1 and the seat cushion pad P1, and a seat back outer covering SK2 covering the seat back frame F2 and the seat back pad P2.

As shown in FIG. 2, the seat cushion S1 comprises the seat cushion frame F1, a first pressure-receiving member 30 as a pressure-receiving member, and left and right side frame covers 40. The seat cushion S1 is formed by covering the seat cushion frame F1, the first pressure-receiving member 30, and the side frame covers 40 with the seat cushion pad P1 and the seat cushion outer covering SK1. The seat cushion pad P1 covers the seat cushion frame F1, the first pressure-receiving member 30, and the side frame covers 40.

The seat cushion frame F1 comprises first side frames 11 as left and right side frames, a front frame 12 and a rear frame 13 as a pair of connecting frames, and a pan frame 14.

The first side frames 11 are each made of sheet metal and formed in a shape elongate in the front-rear direction perpendicular to the lateral direction. In the embodiment, the front-rear direction corresponds to "a longitudinal direction of the side frame". The left and right side frames 11 are disposed apart from each other in the lateral direction.

The front frame 12 and the rear frame 13 connect the left and right first side frames 11. More specifically, the front frame 12 is made of a metal pipe and connects front portions of the left and right first side frames 11. The rear frame 13 is made of a metal pipe and connects rear portions of the left and right first side frames 11. The front frame 12 and the rear frame 12 are disposed apart from each other in the front-rear direction.

The pan frame 14 is made of sheet metal and connects front portions of the left and right first side frames 11.

The seat back S2 comprises the seat back frame F2 and a second pressure-receiving member 50. The seat back S2 is formed by covering the seat back frame F2 and the second pressure-receiving member 50 with the seat back pad P2 and the seat back outer covering SK2. The seat back pad P2 covers the seat back frame F2 and the second pressure-receiving member 50.

The seat back frame F2 comprises left and right lower side frames 22, a pipe frame 23, a lower frame24, and a bridging frame 25.

The lower side frames 22 are each made of sheet metal and formed in a shape elongate in the up-down direction perpendicular to the lateral direction. The pipe frame 23 is made of a metal pipe and includes left and right upper side frames 23A and an upper frame 23B extending in the lateral direction to connect upper ends of the upper frames 23A.

The upper side frames 23A are connected to upper portions of the lower side frames 22 and, together with the lower side frames 22, form second side frames 21 that are left and right frames of the seat back frame F2. The left and right second side frames 21 are formed in a shape elongate in the up-down direction and are disposed apart from each other in the lateral direction. A pair of holders 26 configured to hold the headrest S3 is fixed to the upper frame 23B.

The lower frame 24 and the bridging frame 25 connect the left and right second side frames 21. More specifically, the lower frame 24 is made of sheet metal or a metal pipe and connects lower portions of the left and right second side frames 21. The bridging frame 25 is made of sheet metal and is configured to connect upper portions of the left and right second side frames 21. The bridging frame 25 is disposed below the upper frame 23B. The lower frame 24 and the bridging frame 25 are disposed apart from each other in the up-down direction.

The second pressure-receiving member 50 is a plate-shaped member having configured to support the occupant and is disposed between the left and right second side frames 21. The second pressure-receiving member 50 comprises a plastic member 51 and a mounting wire 52.

The mounting wire 52 is a metal wire that reinforce the plastic member 51 and are partly covered by the plastic member 31. The mounting wire 52 is configured to bridge the lower frame 24 and the bridging frame 25.

The plastic member 51 is a portion that supports the occupant from the rear side and covers a part of the mounting wires 52. The plastic member 51 has a shape of a plate. The plastic member 51 comprises a central support portion 51A and left and right side support portions 51B. The side support portions 51B extend obliquely in a frontward direction from lateral edges of the central support portion 51A in such a manner that the side support portions 51B are positioned further frontward as they extend outward in the lateral direction.

The second pressure-receiving member 50 is mounted on the seat back frame F2 by a lower portion of the mounting wire 52 being fixed on the lower frame 24 and an upper portion of the mounting wire 52, for example, being inserted into a hole formed in the bridging frame 25.

The first pressure-receiving member 30 is a plate-shaped member configured to support the occupant and is disposed between the left and right first side frames 11. As shown in FIG, 3, the first pressure-receiving member 30 comprises a plastic member 31 as an elastic member, and a longitudinal wire 32 and a lateral wire 33 as a wire. In the embodiment, the longitudinal wire 32 corresponds to a "first reinforcing wire" and the lateral wire 33 corresponds to a "second reinforcing wire".

The longitudinal wire 32 and the lateral wire 33 are metal wires that reinforce the plastic member 31, and are covered by the plastic member 31.

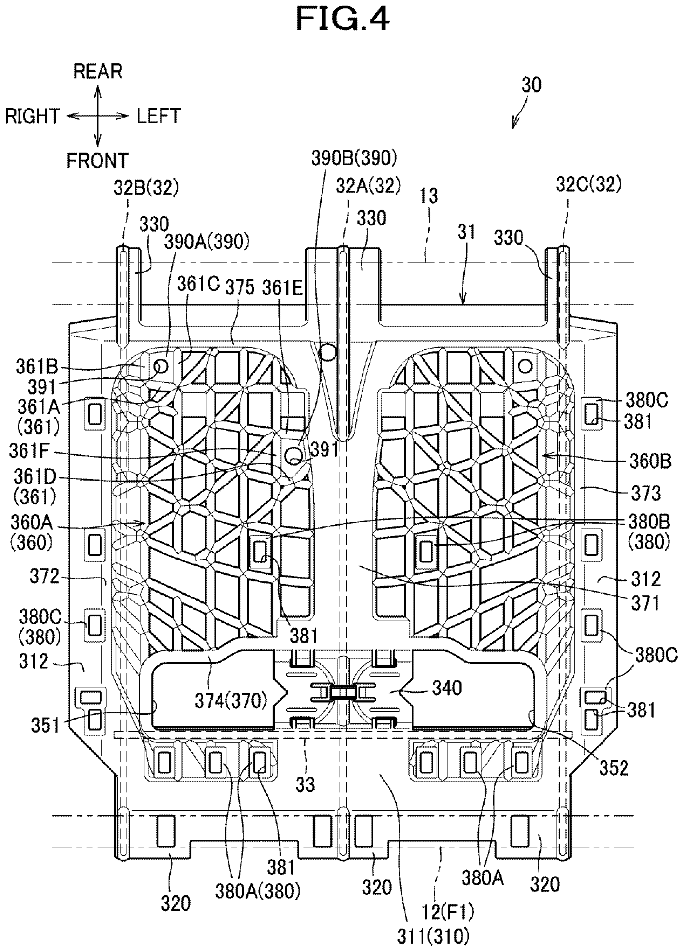

As shown in FIG. 4, the longitudinal wire 32 extends in the front-rear direction as viewed from above. In the embodiment, above corresponds to an "occupant side" and below corresponds to a "side opposite to the occupant side". The longitudinal wire 32 bridges the front frame 12 and the rear frame 13 via the plastic member 31. In the embodiment, the front-rear direction corresponds to a "bridging direction".

The longitudinal wire 32 includes a central wire 32A, a first side wire 32B, and a second side wire 32C.

The central wire 32A is disposed at a central portion of the first pressure-receiving member 30 in the lateral direction. The central wire 32A is disposed between the first side wire 32B and the second side wire 32C.

The first side wire 32B is disposed on one side of the central wire 32A in the lateral direction, i.e., the right side of the central wire 32A. The central wire 32A and the first side wire 32B are disposed apart from each other in the lateral direction. In the embodiment, the lateral direction corresponds to a "direction perpendicular to the bridging direction".

The second side wire 32C is disposed on the other side of the central wire 32A in the lateral direction, i.e., the left side of the central wire 32A. The central wire 32A and the second side wire 32C are disposed apart from each other in the lateral direction.

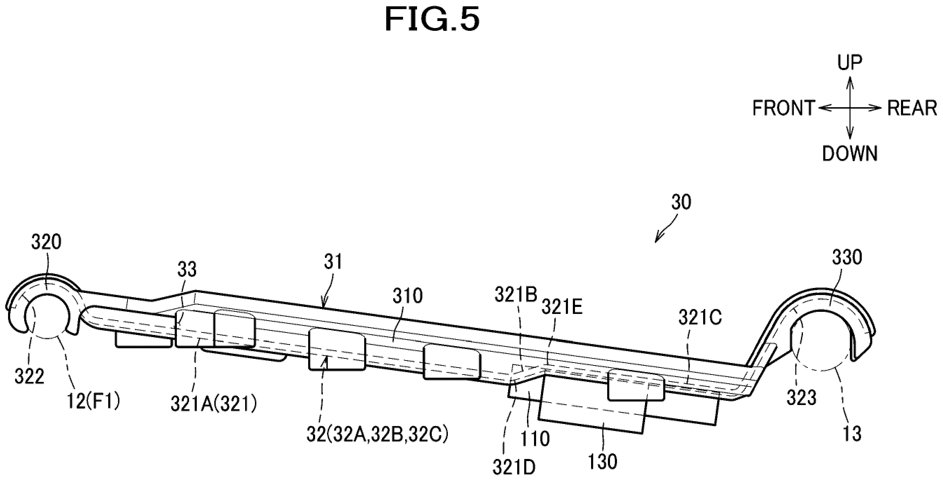

In the embodiment, the central wire 32A, the first side wire 32B, and the second side wire 32C have the same shape. More specifically, as shown in FIG. 5, each of the central wire 32A, the first side wire 32B, and the second side wire 32C has a wire body 321, a front hook 322, and a rear hook 323. The wire body 321 has a first extension portion 321A, a second extension portion 321B, a third extension portion 321C, a first bent portion 321D, and a second bent portion 321E as a bent portion.

The front hook 322 is a portion that engages the front frame 12 via the plastic member 31. The front hook 322 is bent in an arc shape as it extends from a front end of the wire body 321 (first extension portion 321A).

The rear hook 323 is a portion that engages the rear frame 13 via the plastic member 31. The rear hook 323 extends obliquely in a rearward-and-upward direction from a rear end of the wire body 321 (third extension portion 321C), with the rear end bent in an arc shape.

The first extension portion 321A extends in an approximately front-rear direction. More specifically, the first extension portion 321A extends obliquely in a rearward-and-downward direction. The second extension portion 321B extends obliquely in a rearward-and-upward direction from a rear end of the first extension portion 321A. The first bent portion 321D is formed between the first extension portion 321A and the second extension portion 321B. The third extension portion 321C extends obliquely in the rearward-and-downward direction from a rear end of the second extension portion 321B. The third extension portion 321C extends approximately parallel to the first extension portion 321A. The second bent portion 321E is formed between the second extension portion 321B and the third extension portion 321C.

As shown in FIG. 4, the lateral wire 33 extends in a direction perpendicular to the longitudinal wire 32 as viewed from above. More specifically, the lateral wire 33 extends in the lateral direction as viewed from above. The second reinforcing wire is arranged above the first extension portion 321A of the longitudinal wire 32 (refer to FIG. 5) and over the first side wire 32B, the central wire 32A, and the second side wire 32C. The lateral wire 33 also extends along a part of an edge of each of the through holes 351 and 352 provided in the plastic member 31. More specifically, the lateral wire 33 extends along front edges of the through holes 351 and 352.

The plastic member 31 has a shape of a plate. The plastic member 31 includes a body portion 310, a front hook portion 320, and a rear hook portion 330.

The front hook portion 320 is a portion configured to be hooked to the front frame 12 and covers the front hook 322 of the longitudinal wire 32 (refer to FIG. 5).

The rear hook portion 330 is a portion configured to be hooked to the rear frame 13 and covers the rear hook 323 of the longitudinal wire 32 (refer to FIG. 5).

The first pressure-receiving member 30 is mounted on the sheet cushion frame F1 by hooking the front hook portion 320 onto the front frame 12 and hooking the rear hook portion 330 onto the rear frame 13.

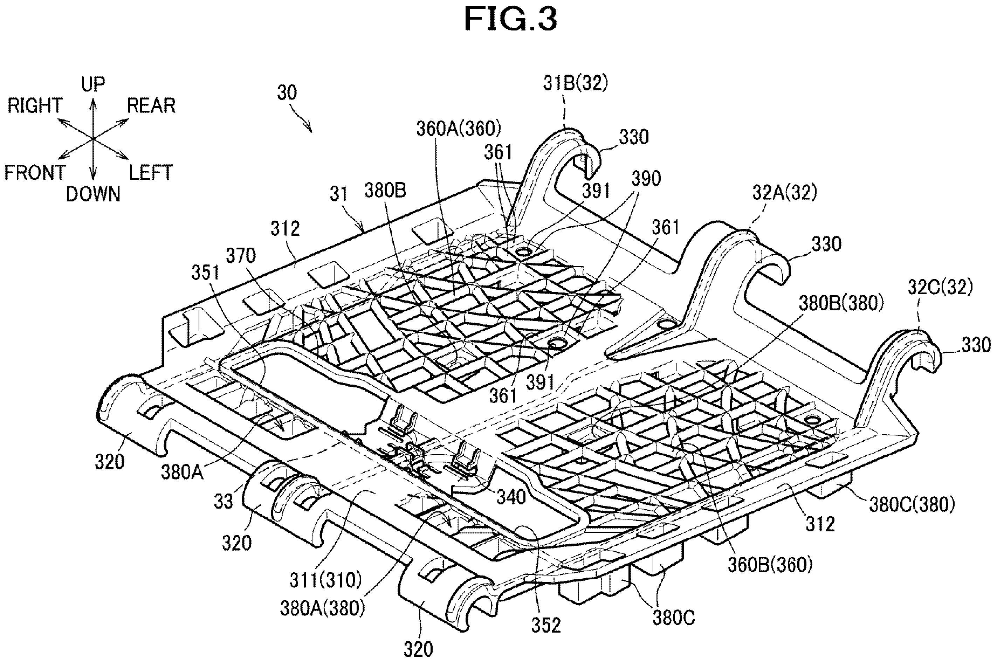

The body portion 310 is a portion that supports the occupant from below and covers the wire body 321 of the longitudinal wire 32 (refer to FIG. 5) and the lateral wire 33. The body portion 310 includes a central support portion 311 and left and right side support portions 312. The side support portions 312 extend obliquely in an upward direction from lateral edges of the central support portion 311 in such a manner that the side support portions 312 are positioned upward as they extend outward in the lateral direction (refer also to FIG. 3).

The plastic member 31 comprises a sensor mounting portion 340, through holes 351 and 352, a mesh portion 360, a frame portion 370, and a mounting portion 380.

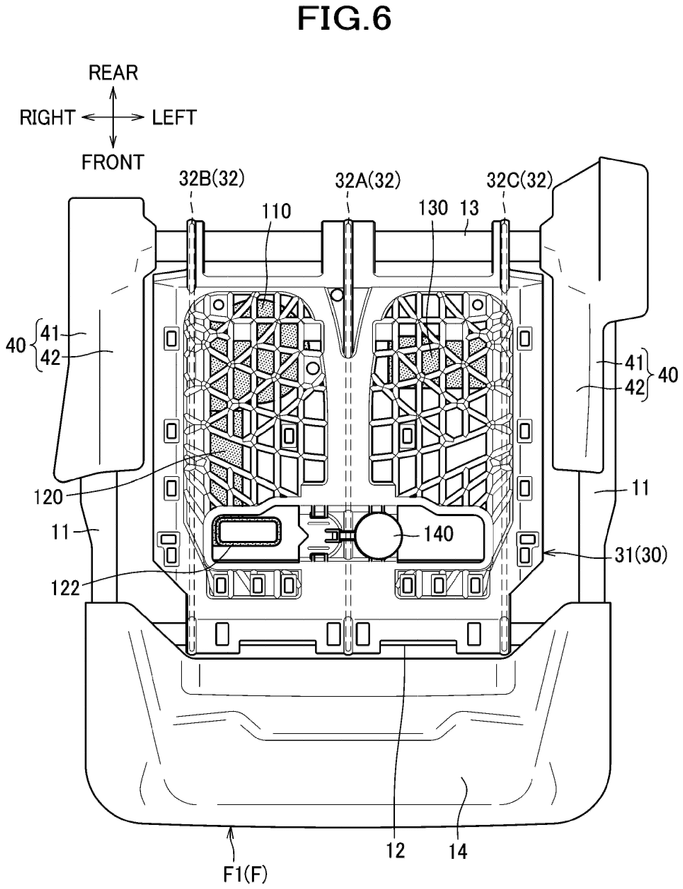

The sensor mounting portion 340 is a portion to which a sensor 140 is mounted (refer to FIG. 6), and is provided on a front portion of the central support portion 311. The sensor mounting portion 340 is provided on a central portion of the first pressure-receiving member 30 in the lateral direction.

The through holes 351 and 352 are through holes extending in the up-down direction and are provided on the left and right sides of the sensor mounting portion 340. More specifically, the through hole 351 is provided on the right side of the sensor mounting portion 340 and the through hole 352 is provided on the left side of the sensor mounting portion 340.

The mesh portion 360 is a portion forming a web shape and is provided in the central support portion 311. The mesh portion 360 includes a first mesh portion 360A provided on the right side of a central portion of the first pressure-receiving member 30 in the lateral direction, and a second mesh portion 360B provided on the left side of the central portion of the first pressure-receiving member 30 in the lateral direction. The first mesh portion 360A is provided on the rear side of the through hole 351 and the second mesh portion 360B is provided on the rear side of the through hole 352.

The frame portion 370 is a portion having a shape of a frame provided to surround the mesh portion 360. The frame portion 370 comprises a first frame portion 371, a second frame portion 372, a third frame portion 373, a fourth frame portion 374, and a fifth frame portion 375.

The first frame portion 371 is a portion positioned between the first mesh portion 360A and the second mesh portion 360B and extends in the front-rear direction. The first frame portion 371 covers the wire body 321 of the central wire 32A.

The second frame portion 372 is a portion on the right side of the first mesh portion 360A and extends in the front-rear direction. The second frame portion 372 covers the wire body 321 of the first side wire 32B.

The third frame portion 373 is a portion on the left side of the second mesh portion 360B and extends in the front-rear direction. The third frame portion 373 covers the wire body 321 of the second side wire 32C.

The fourth frame portion 374 is a portion on a front side of the mesh portion 360 (360A, 360B). The fourth frame portion 374 extends in the lateral direction and connects front ends of the first frame portion 371, the second frame portion 372, and the third frame portion 373. The fourth frame portion 374 forms the rear edges of the through holes 351 and 352.

The fifth frame portion 375 is a portion positioned on a rear side of the mesh portion 360 (360A, 360B). The fifth frame portion 375 is a portion extending in the lateral direction and is a portion configured to connect rear ends of the first frame portion 371, the second frame portion 372, and the third frame portion 373.

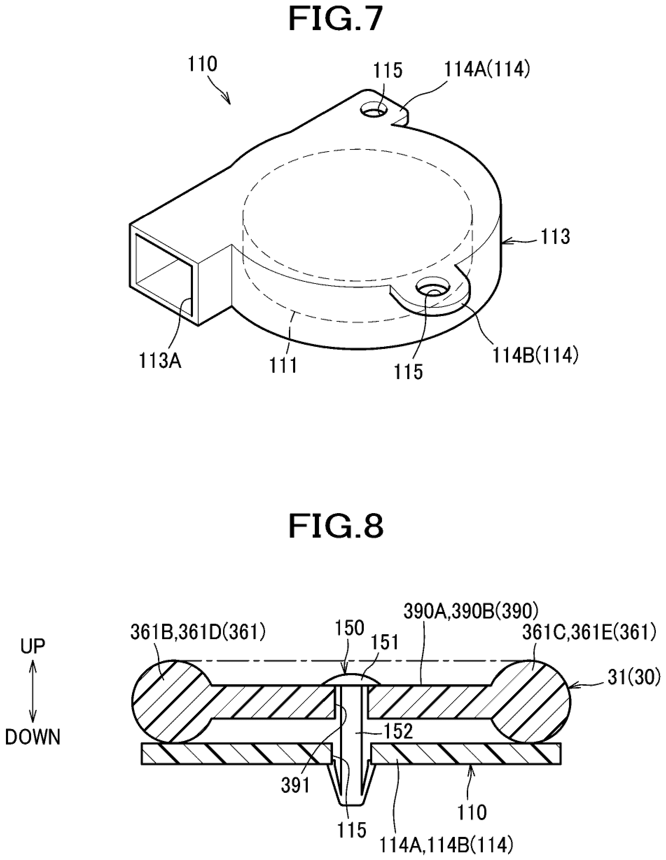

The mounting portion 380 is a portion for mounting a member other than a blower 110 (refer to FIG. 7) on to the first pressure-receiving member 30. The mounting portion 380 has a bottomed cylindrical shape opening upward (refer to FIG. 3), and has a mounting hole 381 extending through a plate-shaped bottom wall. The member other than the blower 110 may be, for example, a harness, a connector, and other members. For example, the harness may be mounted on the mounting portion 380 via a harness clip.

The mounting portion 380 includes first mounting portions 380A, second mounting portions 380B, and third mounting portions 380C.

The first mounting portions 380A and the second mounting portions 380B are provided in the central support portion 311. More specifically, the first mounting portions 380A are provided on a front end portion of the central support portion 311, and the second mounting portions 380B are provided in a central portion of the central support portion 311.

The first mounting portions 380A are provided in the front end portions of the central support portion 311 at a position frontward of the through holes 351, 352, with three first mounting portions 380A laterally aligned in front of the through hole 351 and three first mounting portions 380A laterally aligned in front of the through hole 352. The second mounting portions 380B are provided at a position rearward of the through holes 351, 352, with one second mounting portion 380B positioned rearward of the through hole 351 and one second mounting portion 380B positioned rearward of the through hole 352. The second mounting portion 380B is provided inside a mesh of the mesh portion 360 to block the mesh.

The third mounting portions 380C are provided on the left and right side support portions 312. Four third mounting portions 380C aligned in the front-rear direction are provided on each of the side support portions 312. The third mounting portions 350C that are located frontmost comprise two mounting holes 381.

The plastic member 31 has elasticity. The plastic member 31 (elastic member) is made of an elastic material. More specifically, the plastic member 31 is made of elastic plastic. In the embodiment, the plastic member 31 is made of elastomer. For example, the elastomer may be polyurethane thermoplastic elastomer, polyethylene thermoplastic elastomer, polystyrene thermoplastic elastomer, and polyolefin thermoplastic elastomer. The first pressure-receiving member 30 is integrally molded by insert molding or other molding methods with the plastic member 31 covering the longitudinal wires 32 and the lateral wires 33.

As shown in FIG. 6, the side frame covers 40 are members that cover rear end portions of the first side frames 11. The side frame covers 40 are made of plastic. The side frame covers 40 each include an upper cover 41 and a side cover 42 formed in one piece. In the embodiment, a rear end portion of each of the first side frames 11 corresponds to "one end portion of the side frame in the longitudinal direction" and a front end portion of each of the first side frame 11 corresponds to "the other end portion of the side frame in the longitudinal direction".

The upper covers 41 are portions that cover upper sides of the rear end portions of the first side frames 11.

The side covers 42 are portions that cover lateral inner sides of the rear end portions of the first side frames 11, and extend downward from lateral inner edges of the upper covers 41. More specifically, the side covers 42 extend obliquely downward in such a manner that lateral inner sides of the side covers 42 are located downward than lateral outer sides of the side covers 42 (also refer to FIG. 2).

The car seat S further comprises a blower 110, a duct 120, an ECU 130 as a controller, and a sensor 140. The blower 110 is, for example, a sirocco fan. The ECU 130 is an electronic control unit for controlling the blower 110 and comprises a central processing unit (CPU), a random-access memory (RAM), a read-only memory (ROM), an input/output circuit, and other components. The sensor 140 is a sensor for detecting an occupant seated on the car seat S. The sensor 140 is, for example, a pressure sensor.

The blower 110 is disposed below the first pressure-receiving member 30. The blower 110 is mounted to the first pressure-receiving member 30. In other words, the blower 110 is mounted on an under surface of the first pressure-receiving member 30 which is a surface opposite to an occupant side of the first pressure-receiving member 30. The blower 110 is mounted on the plastic member 31 of the first pressure-receiving member 30. In the embodiment, the blower 110 is mounted directly on the plastic member 30 without the use of brackets or other components. The blower 110 is supported by the seat frame F via the plastic member 31 (the first pressure-receiving member 30). In other words, the blower 110 is not directly supported by the seat frame F.

As shown in FIG. 7, the blower 110 comprises an impeller 111, a motor capable of rotating the impeller, a casing 113 accommodating the impeller 111 and the motor, and two to-be-mounted portions 114. The to-be-mounted portions 114 are plate-shaped portions protruding from the casing 113, and have second through holes 115 to which engaging portions 152 of mounting members 150 (refer to FIG. 8) are engaged to.

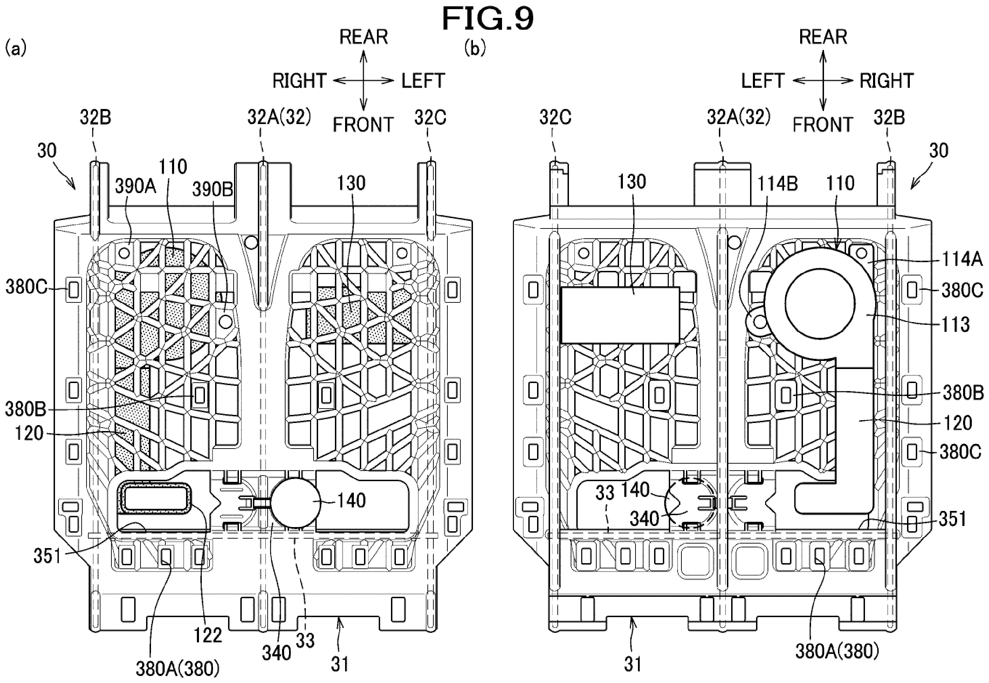

In the embodiment, the to-be-mounted portions 114 include a first to-be-mounted portion 114A and a second to-be-mounted portion 114B. The first to-be-mounted portion 114A extends from the casing 113 in a direction away from the outlet 113A. The second to-be-mounted portion 114B extends from the casing 113 in a direction different from the direction in which the first to-be-mounted portion 114A extends. More specifically, the first to-be-mounted portion 114A extends rearward from the casing 113 and the second to-be-mounted portion 114B extends leftward (toward the center of the first pressure-receiving member 30 in the lateral direction) from the casing 113 (also refer to FIG. 9(b)).

As shown in FIG. 8, the car seat S further comprises a mounting member 150. The mounting member 150 is a member configured to mount the blower 110 on the first pressure-receiving member 30. The mounting member 150 is, for example, a clip and comprises a head portion 151 and an engaging portion 152.

The first pressure-receiving-member 30 comprises a blower mounting portion 390 having a shape of a plate. The blower mounting portion 390 is a portion for mounting the blower 110 on the first pressure-receiving member 30. The blower mounting portion 390 comprises a first through hole 391 extending through the blower mounting portion 390 in the up-down direction. The first through hole 391 is a hole to which the engaging portion 152 of the mounting member 150 is engaged to mount the blower 110 on the first pressure-receiving member 30.

As shown in FIG. 4, the blower mounting portion 390 is provided on the right of the central portion of the first pressure-receiving member 30 in the lateral direction. More specifically, the blower mounting portion 390 is provided inside a mesh of the mesh portion 360A located on the right of the central portion of the first pressure-receiving member 30 in the lateral direction to block the mesh.

The blower mounting portion 390 includes a first blower mounting portion 390A and a second blower mounting portion 390B. The first blower mounting portion 390A is provided in a right edge (an edge of the first mesh portion 360A far from the central portion of the first pressure-receiving member 30 in the lateral direction) of the rear end of the first mesh portion 360A. The second blower mounting portion 390B is provided in a rear portion of a left edge portion of the first mesh portion 360A (an edge of the first mesh portion 360A close to the central portion of the pressure-receiving member 30 in the lateral direction). The second blower mounting portion 390B is provided frontward of the first blower mounting portion 390A.

The blower mounting portion 390 is provided in contact with the frame portion 370. More specifically, the first blower mounting portion 390A is provided such that the rear end of the first blower mounting portion 390A contacts the fifth frame portion 375 of the frame portion 370. The second mounting portion 390B is provided such that a left edge thereof (an edge of the second blower mounting portion 390B close to the central portion of the first pressure-receiving member 30 in the lateral direction) contacts the first frame portion 371 of the frame portion 370. The first frame portion 371 protrudes further upward than the second blower mounting portion 390B. The first frame portion 371 also protrudes further downward than the second blower mounting portion 390B. The fifth frame portion 375 protrudes further upward than the first blower mounting portion 390A. The fifth frame portion 375 also protrudes further downward than the first blower mounting portion 390A.

A thick portion 361 is provided around the blower mounting portion 390. In the first embodiment, the thick portion 361 is a strand of the first mesh portion 360A. The thick portion 361 is provided in contact with the blower mounting portion 390. More specifically, the thick portion 361 is provided in contact with a front edge and left and right edges of the first blower mounting portion 390A. The thick portion 361 is also provided in contact with front and rear edges and right edge of the second blower mounting portion 390B. The thick portion 361 protrudes further upward than the blower mounting portion 390. The thick portion 361 also protrudes further downward than the blower mounting portion 390. The thick portion 361 includes thick portions 361A to 361F.

The thick portion 361A contacts the front edge of the first blower mounting portion 390A, the thick portion 361B contacts the right edge of the first blower mounting portion 390A, and the thick portion 361C contacts the left edge of the first blower mounting portion 390A. The first blower mounting portion 390A is located between the thick portion 361B and the thick portion 391C. The thick portions 361A, 361B, and 361C protrude further upward than the first blower mounting portion 390A. The thick portions 361A, 361B, and 361C also protrude further downward than the first blower mounting portion 390A.

The thick portion 361D contacts the front edge of the second blower mounting portion 390B, the thick portion 361E contacts the rear edge of the second blower mounting portion 390B, and the thick portion 361F contacts the right edge of the second blower mounting portion 390B. The second blower mounting portion 390B is located between the thick portion 361D and the thick portion 361E. The thick portions 361D, 361E, and 361F protrude further upward than the second blower mounting portion 390B. The thick portions 361D, 361E, and 361F also protrude further downward than the second blower mounting portion 390B.

As shown in FIG. 8, the engaging portion 152 of the mounting member 150 passes through and is engaged with the first through hole 391 of the blower mounting portion 390 provided on the first pressure-receiving member 30 and the second through hole 115 of the to-be-mounted portion 114 provided on the blower 110 from the top to the bottom. An end portion of the engaging portion 152 protrudes further downward than the blower mounting portion 390.

The thick portion 361 (361A to 361G) protrudes further upward than the mounting member 150. More specifically, the thick portion 361 protrudes further upward than the head 151 of the engaging member 150. In other words, the head 151 of the engaging member 150 does not protrude further upward than the thick portion 361 (refer to the chain dotted line).

The first to-be-mounted portion 114A of the blower 110 is disposed below the first blower mounting portion 390A and contacts the thick portions 361B and 361C. Here, one of the thick portions 361B and 361C corresponds to a "first thick portion" and the other of the thick portions 361B and 361C corresponds to a "second thick portion".

The second to-be-mounted portion 114B of the blower 110 is disposed below the second blower mounting portion 390B and contacts the thick portions 361D and 361E. Here, one of the thick portions 361D and 361E corresponds to the "first thick portion" and the other of the thick portions 361D and 361E corresponds to the "second thick portion".

As shown in FIG. 9 (a) and (b), the blower 110 is disposed in a position that does not overlap a position of the mounting portion 380 as viewed from above. More specifically, the blower 110 is disposed in a position that does not overlap positions of any of the first mounting portions 380A, the second mounting portions 380B, and the third mounting portions 380C as viewed from above.

The blower 110 is disposed in a position that does not overlap a position of the longitudinal wire 32 as viewed from above. More specifically, the blower 110 is disposed in a position that does not overlap positions of any of the central wire 32A, the first side wire 32B, and the second side wire 32C as viewed from above. The blower 110 is also disposed in a position that does not overlap a position of the lateral wire 33 as viewed from above.

The blower 110 is disposed on the right side of the central wire 32A. More specifically, the blower 110 is disposed between the central wire 32A and the first side wire 32B as viewed from above. In the embodiment, one of the central wire 32A and the first side wire 32B corresponds to a "first wire" and the other one of the central 32A wire and the first side wire 32B corresponds to a "second wire".

As shown in FIG. 5, a position of the blower 110 in the front-rear direction overlaps positions of the first bent portion 321D and the second bent portion 321E of the longitudinal wire 32 in the front-rear direction. The blower 110 is also disposed in a position that overlaps positions of the first bent portion 321D and the second bent portion 321E of the longitudinal wire 32 as viewed in the lateral direction. The blower 110 is disposed in a position between the bent portions 321D and 321E of the central wire 32A and the bent portions 321D and 321E of the first side wire 32B.

As shown in FIG. 6, a position of the blower 110 in the front-rear direction overlaps a position of the side frame covers 40 in the front-rear direction. More specifically, the blower 110 is disposed rearward of the front ends of the side frame covers 40 and frontward of the rear ends of the side frame covers 40 as viewed from above. In the first embodiment, the blower 110 is disposed between the left and right side frame covers 40 as viewed from above.

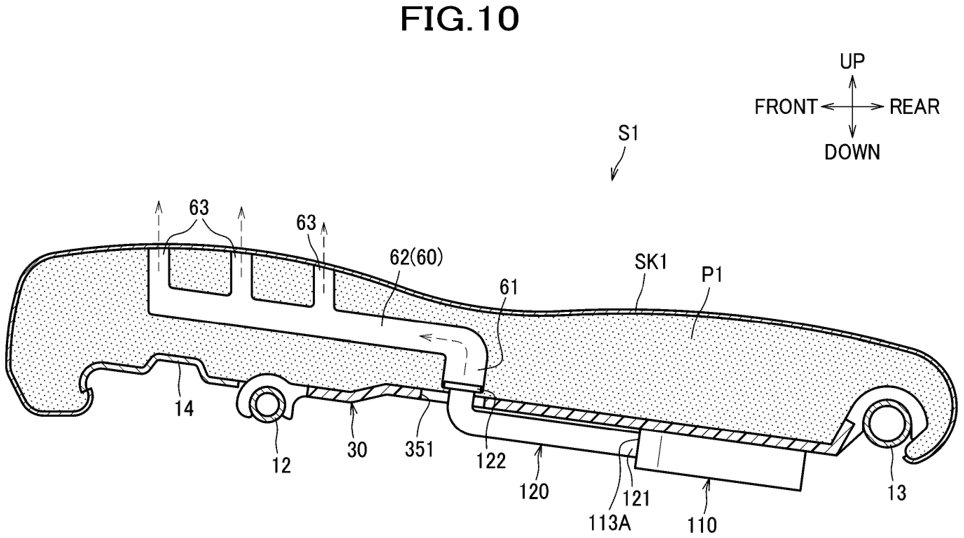

As shown in FIG. 10, the duct 120 is a tube-shaped member that connects the blower 110 and an air passage 60 provided in the seat cushion pad P1. The seat cushion pad P1 includes the air passage 60 which is formed therein. The air passage 60, for example, includes a first air passage 61, a second air passage 62, and a plurality of third air passages 63. The first air passage 61 is configured to communicate the second air passage 62 with a space below the seat cushion pad P1. The third air passage 63 is configured to communicate the second air passage 62 with a space above the seat cushion pad P1.

The duct 120 is configured such that a first end portion 121 that is one end portion of the duct 120 is connected with the outlet 113A of the blower 110 and the second end portion 122 that is the other end portion of the duct 120 is connected with the first air passage 61 of the air passage 60. The seat cushion S1 is configured such that air delivered from the blower 110 passes through the duct 120 and the air passage 60 and is blown out from the top surface of the cushion pad P1 toward the occupant.

The duct 120 has the shape of a letter L and extends frontward from the blower 110 and then is bent to extend upward, as viewed from the lateral direction. The duct 120 extends from the lower side of the first pressure-receiving member 30 through the through hole 351, to the upper side of the first pressure-receiving member 30.

As shown in FIG. 9 (a) and (b), the duct 120 is disposed in a position that does not overlap a position of the mounting portion 380 as viewed from above. More specifically, the duct 120 is disposed in a position that does not overlap the positions of any of the first mounting portion 380A, the second mounting portion 380B, and the third mounting portion 380C, as viewed from above.

The second end portion 122 of the duct 120 that is a portion at which the duct 120 and the air passage 60 are connected (refer to FIG. 10 for details) is located in a position that overlaps a position of the sensor 140 in the front-rear direction. More specifically, the second end portion 122 of the duct 120 and the sensor 140 are aligned side by side in the lateral direction as viewed from above. The second end portion 122 of the duct 120 is disposed on the right side of the sensor 140.

The second end portion 122 of the duct 120 is disposed on the right side of the central portion of the first pressure-receiving member 30 in the lateral direction. The second end portion 122 of the duct 120 is disposed between the lateral wire 33 and the blower 110 as viewed from above. The second end portion 122 of the duct 120 is disposed in a position closer to the lateral wire 33 than to the blower 110 as viewed from above.

As shown in FIG. 6, the position of the second end portion 122 of the duct 120 in the front-rear direction is closer, than the side frame covers 40, to the front end portions of the first side frames 11. In other words, the second end portion 122 of the duct 120 is disposed frontward of the front ends of the side frame covers 40 as viewed from above.

As shown in FIG. 9 (a) and (b), the ECU 130 is mounted to the first pressure-receiving member 30. The ECU 130 is disposed in a position that does not overlap a position of the longitudinal wire 32 as viewed from above. More specifically, the ECU 130 is disposed in a position that does not overlap positions of any of the central wire 32A, the first side wire 32B, and the second side wire 32C as viewed from above. The ECU 130 is disposed in a position that does not overlap a position of the lateral wire 33 as viewed from above.

The ECU 130 is disposed on the left of the central wire 32A. More specifically, the ECU 130 is disposed between the central wire 32A and the second side wire 32C as viewed from above. A position of the ECU 130 in the front-rear direction overlaps a position of the blower 110 in the front-rear direction. In other words, the blower 110 and the ECU 130 are aligned side by side in the lateral direction.

As shown in FIG. 5, the position of the ECU 130 in the font-rear direction overlaps a position of the second bent portion 321E of the longitudinal wire 32 in the front-rear direction. The ECU 130 may be disposed in a position that overlaps a position of the second bent portion 321E of the longitudinal wire 32 as viewed in the lateral direction. The ECU 130 may be disposed in a position that overlaps a position of the first bent portion 321D of the longitudinal wire 32 as viewed in the lateral direction.

As shown in FIG. 9 (a) and (b), the sensor 140 is mounted on a top surface of the first pressure-receiving member 30 which is the occupant side surface of the first pressure-receiving member 30. More specifically, the sensor 140 is mounted on a top surface of the sensor mounting portion 340. The sensor 140 is disposed on the left of the central portion of the first pressure-receiving member 30 in the lateral direction. More specifically, the sensor 140 is disposed on a left side portion of the sensor mounting portion 340 with respect to the central portion of the pressure-receiving member 30 in the lateral direction.

The sensor 140 is disposed in a position that does not overlap a position the blower 110 as viewed from above. The position of the sensor 140 in the lateral direction and the position of the sensor 140 in the front-rear direction both do not overlap a position of the blower 110. More specifically the sensor 140 is disposed in a position frontward of the blower 110 and leftward of the blower 110 as viewed from above. The sensor 140 is disposed in a position obliquely frontward-and-leftward of the blower 110 as viewed from above.

The sensor 140 is disposed in a position that does not overlap a position of the duct 120 as viewed from above. More specifically, the sensor 140 is disposed in a position on the left of the duct 120 as viewed from above. Moreover, the sensor 140 is disposed in a position on the left of the second end portion 122 of the duct 120.

As shown in FIG. 6, the position of the sensor 140 in the front-rear direction is closer, than the side frame covers 40, to the front end portions of the first side frames 11. More specifically, the sensor 140 is disposed frontward of the front ends of the side frame covers 40 as viewed from above.

Next, advantageous effects of the car seat S according to the first embodiment will be described.

The first pressure-receiving member 30 includes the plastic member 31 having elasticity and the blower 110 is mounted to the plastic member 31; therefore, vibrations caused by operation of the blower 110 can be restrained.

The first pressure-receiving member 30 has a shape of a plate; therefore, it is easier to mount the blower 110 onto the first pressure-receiving member 30.

The plastic member 31 on which the blower 110 is mounted is made of elastomer; therefore, vibrations caused by operation of the blower 110 can be efficiently restrained.

The blower 110 is disposed in a position that does not overlap a position of the mounting portion 380 as viewed from above; therefore, the blower 110 is less likely to get in the way when members other than the blower 110, such as harnesses, are being mounted in the mounting portion 380.

The duct 120 is disposed in a position that does not overlap a position of the mounting portion 380 as viewed from above; therefore, the duct 120 is less likely to get in the way when members other than the blower 110, such as harnesses, are being mounted in the mounting portion 380.

The duct 120 extends upward from the lower side of the first pressure-receiving member 30 through the through hole 351 of the first pressure-receiving member 30; therefore, for example, the duct 120 can be disposed in a compact manner compared to an alternative configuration in which a duct extends upward past a forward, rearward, right, or left side of the first pressure-receiving member.

The position of the second end portion 122 of the duct 120 in the front-rear direction is closer, than the side frame covers 40, to the front end portions of the first side frames 11; therefore, the second end portion 122 of the duct 120 can be disposed apart from the side frame covers 40.

The position of the blower 110 overlaps the position of the side frame covers 40 in the front-rear direction; therefore, the blower 110 can be disposed within a length of the side frame covers 40 in the front-rear direction.

The blower 110 is mounted directly on the plastic member 31; therefore, for example, the number of components can be reduced compared to an alternative configuration in which a blower is mounted on the plastic member via a bracket or the like.

The sensor 140 is mounted on the top surface of the first pressure-receiving member 30 and the blower 110 is mounted on the under surface of the first pressure-receiving member; therefore, for example, the sensor 140 and the blower 110 can be disposed in a compact manner compared to an alternative configuration in which both the sensor and the blower are disposed on a same side of the first pressure-receiving member in the up-down direction.

As an additional note, when both the sensor and the blower are mounted on the same side of the first pressure-receiving member in the up-down direction, the blower must be disposed a certain distance away from the sensor so as not to interfere with detection of the sensor; therefore, it is difficult to dispose the sensor and the blower in a compact manner. In the first embodiment, the blower 110 does not interfere with the detection of the sensor 140 even when the blower 110 is disposed close to the sensor 140. Thus, the sensor 140 and the blower 110 can be disposed in a compact manner.

The position of the second end portion 122 of the duct 120 in the front-rear direction overlaps the position of the sensor 140 in the front-rear direction; therefore, the sensor 140 and the second end portion 122 of the duct 120 can be disposed in a compact manner in the front-rear direction.

The second end portion 122 of the duct 120 is disposed on the left and the sensor 140 is disposed on the right with respect to the central portion of the first pressure-receiving member 30 in the lateral direction; therefore, for example, an increase in size of the first pressure-receiving member 30 can be restrained compared to an alternative configuration in which the portion of the duct at which the duct and the air passage are connected and the sensor is disposed on the same side in the lateral direction.

The sensor 140 is disposed in a position that does not overlap a position of the duct 120 as viewed from above; therefore, the duct can be made shorter. Further, the duct can be made in a simpler shape.

The sensor 140 is disposed in a position that does not overlap a position of the blower 110 as viewed from above; therefore, vibrations caused by operation of the blower 110 can be restrained from interfering with the detection of the sensor 140.

The position of the sensor 140 in the lateral direction does not overlap a position of the blower 110 in the lateral direction; therefore, the sensor 140 can be disposed further away from the blower 110.

The position of the blower 110 overlaps positions of the side frame covers 40 in the front-rear direction and the position of the sensor 140 in the front-rear direction is closer, than the side frame covers 40, to the front end portions of the first side frames 11; therefore, the sensor 140 can be disposed further apart from the blower 110. The blower 110 is disposed in a position that does not overlap a position of the longitudinal wire 32 as viewed from above; therefore, the blower 110 can be disposed in a position that overlaps a position of the longitudinal wire 32 in the up-down direction, which is a direction in which the first pressure-receiving member 30 and the occupant are opposed to each other. Thus, the first pressure-receiving member 30 and the blower 110 can be disposed in a compact manner in the up-down direction.

The position of the blower 110 in the front-rear direction overlaps the bent portions 321D and 321E of the longitudinal wire 32; therefore, the blower 110 can be mounted in a close proximity of the bent portions 321D and 321E, which are portions of the longitudinal wire 32 having high rigidity. Thus, the mounting strength of the blower 110 can be enhanced.

The position of the ECU 130 in the front-rear direction overlaps a position of the second bent portion 321E of the longitudinal wire 32 in the front-rear direction; therefore, the ECU 130 can be mounted in a close proximity of the second bent portion 321E, which is a portion of the longitudinal wire 32 having high rigidity. Thus, the mounting strength of the ECU 130 can be enhanced.

The ECU 130 is disposed in a position that does not overlap a position of the longitudinal wire 32 as viewed from above; therefore, the ECU 130 can be disposed in a position that overlaps a position of the longitudinal wire 32 in the up-down direction. Thus, the first pressure-receiving member 30 and the ECU 130 can be disposed in a compact manner in the up-down direction.

The blower 110 is disposed between the central wire 32A and the first side wire 32B as viewed from above; therefore, the blower 110 can be mounted on a portion of the first pressure-receiving member 30 between the central wire 32A and the first side wire 32B that is reinforced by the central wire 32A and the first side wire 32B. Thus, the mounting strength of the blower 110 can be enhanced.

The second end portion 122 of the duct 120 is disposed in a position closer to the lateral wire 33 than to the blower 110 as viewed from above; therefore, the second end portion 122 of the duct 120 can be disposed close to a portion of the first pressure-receiving member 30 reinforced by the lateral wire 33.

The blower 110 is disposed on the right and the ECU 130 is disposed on the left with respect to the central wire 32A; therefore, for example, positions for mounting the blower 110 and the ECU 130 can be more easily secured compared to an alternative configuration in which the blower and the controller is disposed on the same side in the lateral direction.

The blower 110 is disposed between the central wire 32A and the first side wire 32B as viewed from above; therefore, the blower 110 can be mounted on a portion of the first pressure-receiving member 30 between the central wire 32A and the first side wire 32B which is reinforced by the central wire 32A and the first side wire 32B. The ECU 130 is disposed between the central wire 32A and the second side wire 32C as viewed from above; therefore, the ECU 130 can be mounted on a portion of the first pressure-receiving member 30 between the central wire 32A and the second side wire 32C which is reinforced by the central wire 32A and the second side wire 32C. Thus, the mounting strength of the blower 110 and the ECU 130 can be enhanced.

The lateral wire 33 extends along front edges of the through holes 351 and 352 of the plastic member 31; therefore, the edges of the through holes 351 and 352 of the plastic member 31 can be reinforced by the lateral wire 33.

The plastic member 31 comprises the mesh portion 360; therefore, cushioning properties of the first pressure-receiving member 30 can be enhanced. Further, the weight of the first pressure-receiving member 30 can be reduced.

The thick portion 361 is provided around the blower mounting portion 390; therefore, the strength of the blower mounting portion 390 can be enhanced, and the mounting strength of the blower 110 can be enhanced. The thick portion 361 is provided around the blower mounting portion 390; therefore, the amount of protrusion of the engaging portion 152 engaged with the blower mounting portion 390 can be made relatively smaller.

The end portion of the engaging portion 152 engaged with the blower mounting portion 390 protrudes further downward than the blower mounting portion 390; therefore, the amount of protrusion of the mounting member 150 in the upward direction can be made smaller.

The thick portion 361 protrudes further upward than the mounting member 150; therefore, it is possible to configure the mounting member 150 such that the mounting member 150 does not protrude further upward than the thick portion 361.

The first to-be-mounted portion 114A of the blower 110 is disposed in contact with the thick portion 361B and the thick portion 361C; therefore, rattling of the first to-be-mounted portion 114A can be restrained. The second to-be-mounted portion 114B of the blower 110 is disposed in contact with the thick portion 361D and the thick portion 361E; therefore, rattling of the second to-be-mounted potion 114B can be restrained. Thus, rattling of the blower 110 can be restrained.

The blower mounting portion 390 is provided on the right with respect to the central portion of the first pressure-receiving member 30 in the lateral direction; therefore, the blower 110 can be disposed on the right with respect to the central portion of the first pressure-receiving member 30 in the lateral direction, and space for mounting members other than the blower 110 such as the ECU 130 can be secured on the left.

The first pressure-receiving member 30 includes the mesh portion 360 on which the blower mounting portion 390 is provided; therefore, cushioning properties of the first pressure-receiving member 30 can be enhanced by the mesh portion 360 while providing the blower mounting portion 390 on the first pressure-receiving member 30.

The blower mounting portion 390 is provided in contact with the frame portion 370 that surrounds the mesh portion 360; therefore, strength of the blower mounting portion 390 can be enhanced, and mounting strength of the blower 110 can thereby be further enhanced.

Next, modifications of the first embodiment will be described.

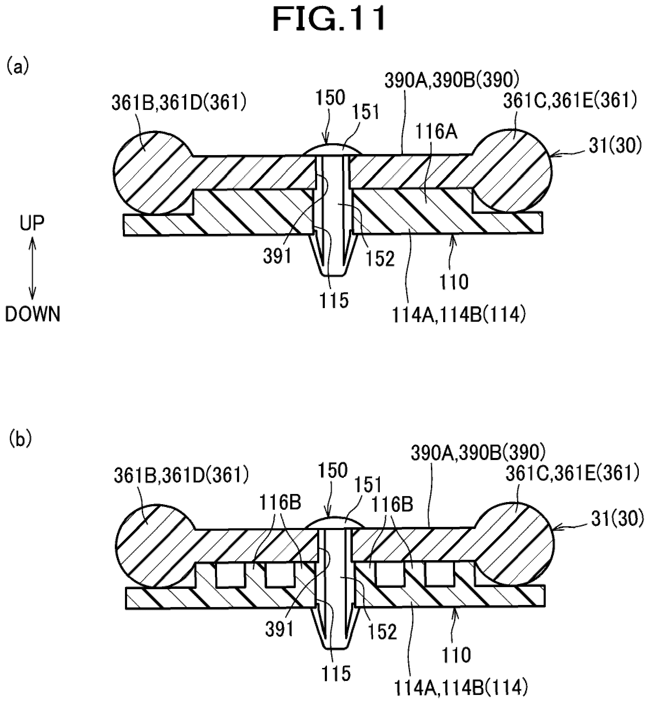

As shown in FIG. 11 (a) and (b), the blower 110 may be configured to comprise protrusions 116A and 116B that protrude from the to-be-mounted portion 114 toward the blower mounting portion 390. For example, as shown in FIG 11 (a), the protrusions 116A may be configured to have a shape of a quadrangular prism or a cylinder. The protrusions 116A may have a shape of a trapezoid.

As shown in FIG. 11 (b), for example, the protrusions 116B may be configured to have a shape of a rib extending in the front-rear direction with a plurality of the ribs aligned side by side in the lateral direction. The protrusions 116B may be configured to have a shape of a rib extending in the lateral direction with a plurality of the ribs aligned side by side in the front-rear direction.

The protrusions 116A and 116B contact the blower mounting portion 390 from below in a state where the engaging portion 152 of the mounting member 150 engages the first through hole 391 of the blower mounting portion 390 and the second through hole 115 of the to-be-mounted portion 114. By the blower 110 further comprising the protrusions 116A and 116B in contact with the blower mounting portion 390, in a configuration in which the to-be-mounted portion 114 is disposed in contact with the thick portions 361B and 361C or 361D and 361E, rattling of the to-be-mounted portion 114 can be further restrained by the protrusions 116A and 116B and the thick portions 361B an 361C or 361D and 361E. Thus, rattling of the blower 110 can be further restrained.

Next, a second embodiment will be described. The following description focuses on points that differ from the embodiment described above. As to points that are the same as the embodiment described above, the same reference characters will be affixed to the same elements and description thereof will be omitted.

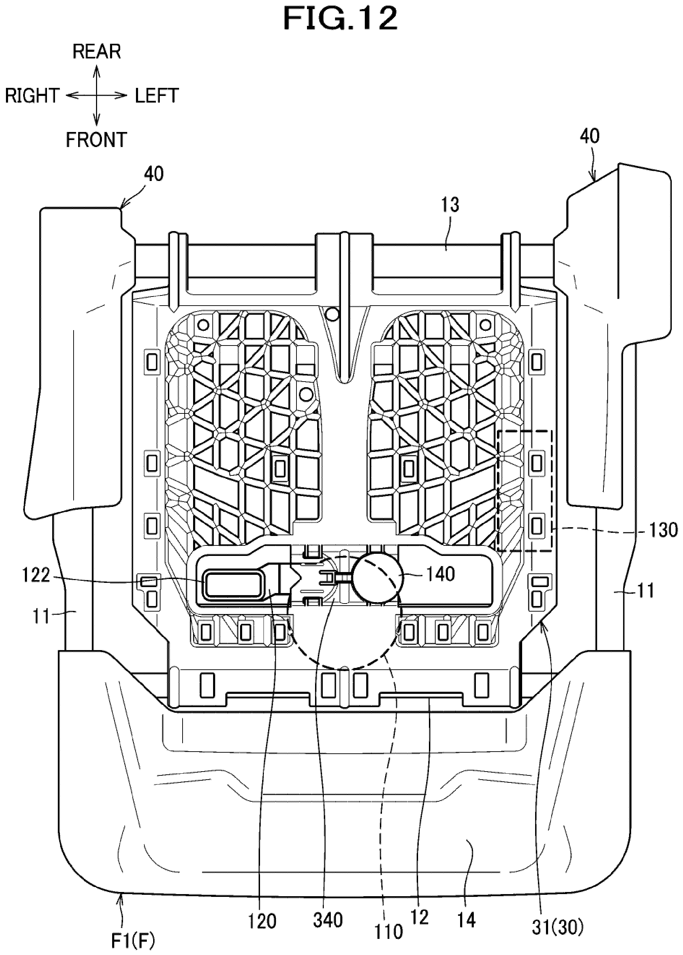

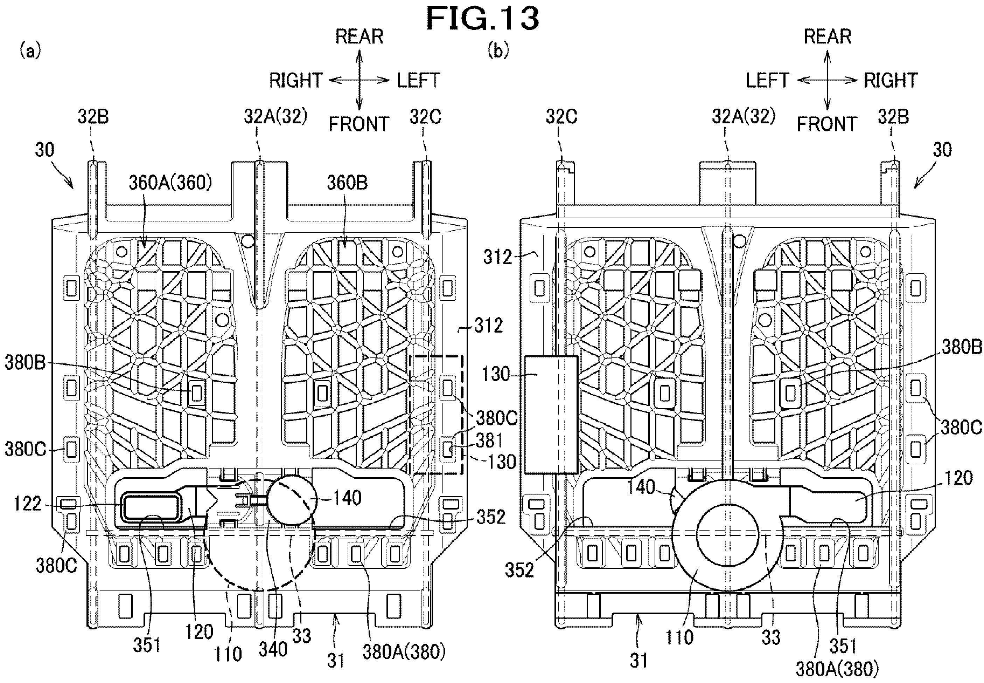

As shown in FIG. 12 and FIGS. 13 (a) and (b), the blower 110 is mounted below the sensor mounting portion 340 provided on the plastic member 31 of the first pressure-receiving member 30 in the second embodiment. The blower 110 is mounted directly on the pressure-receiving member 30. In one example, the blower 110 comprises a to-be-mounted portion having a plate shape and is fixed on the plastic member 31 by screws, rivets, etc.

The blower 110 is disposed on a central portion of the first pressure-receiving member 30 in the lateral direction. The blower 110 is disposed in a position that overlaps a position of the central wire 32 as viewed from above. The blower 110 is disposed in a position that does not overlap positions of the first side wire 32B and the second side wire 32C as viewed from above. The blower 110 is disposed between the first side wire 32B and the second side wire 32C as viewed from above. The blower 110 is disposed in a position that overlaps a position of the lateral wire 33 as viewed from above.

A position of the blower 110 in the front-rear direction is closer, than the side frame covers 40, to the front end portions of the first side frames 11. More specifically, the blower 110 is disposed frontward of the front ends of the side frame covers 40 as viewed from above.

The position of the blower 110 in the front-rear direction overlaps positions of the through holes 351 and 352 in the front-rear direction. More specifically, the blower 110 is disposed on the left of the through hole 351 as viewed from above. The blower 110 is disposed on the right of the through hole 352 as viewed from above. In other words, the blower 110 is disposed in a position between the through hole 351 and the through hole 352.

The blower 110 is disposed in a position that overlaps a position of the sensor 140 as viewed from above. In other words, the sensor 140 is disposed in a position that overlaps a position of the blower 110 as viewed from above. A position of the sensor 140 in the front-rear direction overlaps a position of the blower 110 in the front-rear direction. A position of the sensor 140 in the lateral direction overlaps a position of the blower 110 in the lateral direction. The sensor 140 is disposed above the blower 110. The blower 110 and the sensor 140 are opposed to each other in the up-down direction with the sensor mounting portion 340 disposed therebetween.

In the second embodiment, the duct 120 extends toward the right from the blower 110, and then is bent to extend upward. The duct 120 extends from the lower side of the first pressure-receiving member 30 through the through hole 351, to the upper side of the first pressure-receiving member 30.

The duct 120 is disposed in a position that does not overlap a position of the mounting portion 380 as viewed from above. More specifically, the duct 120 is disposed in a position that does not overlap a position of any of the first mounting portions 380A, the second mounting portions 380B, or the third mounting portions 380C as viewed from above.

In the second embodiment, the ECU 130 is mounted on the mounting portion 380 provided on the first pressure-receiving member 30. More specifically, the ECU 130 is mounted on the third mounting portion 380C provided on the left side support portion 312. For example, the ECU 130 is mounted on the first pressure-receiving member 30 by engaging a clip, a claw provided on the ECU 130 itself, and other members with the mounting hole 381.

The ECU 130 is disposed in a position that does not overlap a position of the central wire 32A and the first side wire 32B as viewed from above. The ECU 130 is disposed to the left of the central wire 32A. The ECU 130 is disposed in a position that overlaps a position of the second side wire 32C as viewed from above.

Next, advantageous effects of the car seats according to the second embodiment will be described.

The position of the blower 110 in the front-rear direction overlaps a position of the through hole 351 of the first pressure-receiving member 30 in the front-rear direction; therefore, a distance between the blower 110 and the through hole 351 can be made shorter. Thus, the duct 120 can be made shorter.

The position of the blower 110 in the front-rear direction is closer, than the side frame covers 40, to the front end portions of the first side frames 11; therefore, the blower 110 can be disposed apart from the side frame covers 40.

The sensor 140 is disposed in a position that overlaps a position of the blower 110 as viewed from above; therefore, the sensor 140 and the blower 110 can be more compactly disposed.

Although the first and second embodiments have been described above, the vehicle seat can be modified accordingly when implemented as shown in the examples given below.

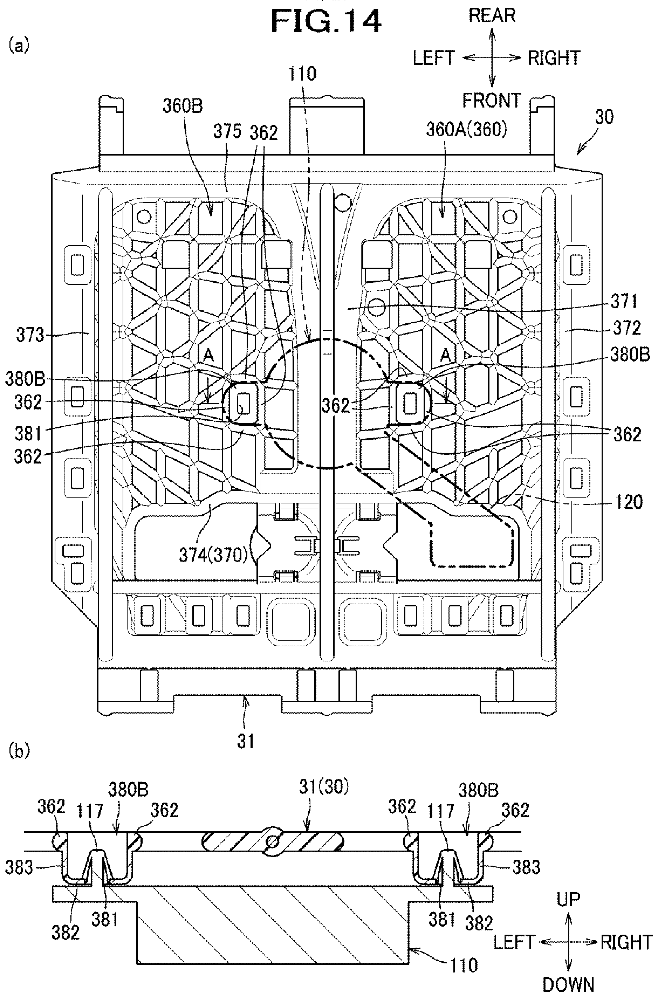

In the above-described embodiment, the car seat S is configured to comprise the mounting member 150 having the engaging portion 152; however, for example, the car seat S may not comprise the mounting member 150 and the blower 110 may be configured to comprise an engaging portion 117, as in a first modification shown in FIG. 14 (a) and (b). In the first modification, the blower 110 is mounted on the first pressure-receiving member 30 by the engaging portion 117 engaged with the mounting hole 381 of the second mounting portion 380B from below. The blower 110 comprises the engaging portion 117; therefore, a mounting member including an engaging portion will not be necessary, and the number of components can be reduced.

The second mounting portion 380B comprises a bottom wall 382 on which the mounting hole 381 is provided and a side wall 383 protruding upward from the outer periphery of the bottom wall 382. The upper edge of the side wall 383 is connected with a web portion 362 of the mesh portion 360 (360A, 360B). In the first modification, the bottom wall 382 corresponds to the "blower mounting portion" and the mounting hole 381 corresponds to the "first through hole". The side wall 383 and the web portion 362 correspond to the "thick portion".

In the first modification, the side wall 383 and the web portion 362 as the thick portion are not provided around a part of the periphery of the bottom wall 382, but around the entire periphery of the bottom wall 382. In other words, in the first modification, the bottom wall 382 as the blower mounting portion is not in contact with the frame portion 370 (371 to 375). In the first modification, the side wall 383 and the web portion 362 as the thick portion only protrudes upward of the bottom wall 382, and do not protrude downward of the bottom wall 382.

The end portion of the engaging portion 117 protrudes upward of the bottom wall 382. The web portion 362 of the side wall 383 and the web portion 362 constituting the thick portion protrudes upward of the engaging portion 117. More specifically, the web portion 362 protrudes upward of the end portion of the engaging portion 117. In other words, the engaging portion 117 does not protrude upward of the web portion 362.

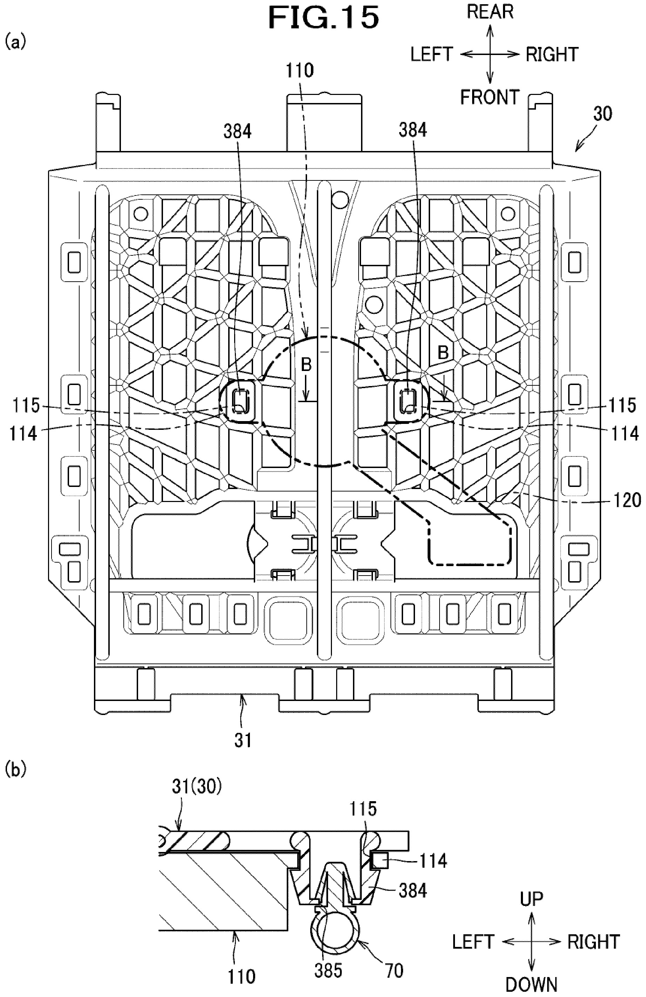

The car seat S may be configured such that the first pressure-receiving member 30 comprises an engaging portion 384, as in the second modification shown in FIG. 15 (a) and (b). More specifically, the engaging portion 384 protrudes downward from the plastic member 31. In the second modification, the blower 110 is mounted on the first pressure-receiving member 30 by the engaging portion 384 engaging the second through hole 115 of to-be-mounted portion 114 provided on the blower 110 from above. The blower 110 comprises the engaging portion 384; therefore, the mounting member comprising the engaging portion will not be necessary, and the number of components can thereby be reduced.

The engaging portion 384 may comprise a mounting hole 384 extending through the engaging portion 384 in the up-down direction at an end portion thereof. A member other than the blower 110 may be mounted to the mounting hole 384. For example, a harness clip 70 configured to hold the harness can engage the mounting hole 385 to mount the harness on the first pressure-receiving member 30.

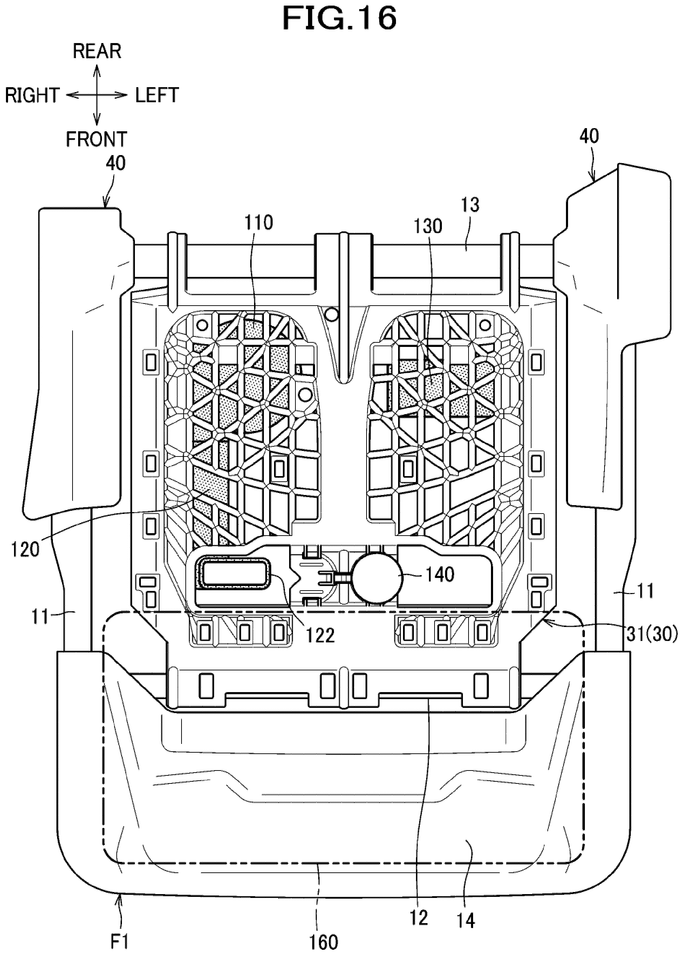

The car sheet S may be configured to comprise a seat cushion air bag 160 as in the third modification shown in FIG. 16. The seat cushion air bag 160 inflates at a time of a crash to restrain a so-called submarining, in which the occupant slides out of the car seat S into a footwell, from occurring. The seat cushion airbag 160 is disposed above the pan frame 14.

The blower 110, the duct 120, the ECU 130, and the sensor 140 are each disposed in a position that does not overlap a position of the uninflated seat cushion airbag 160 as viewed from above. More specifically, the blower 110, the duct 120, the ECU 130, and the sensor 140 are each disposed rearward of the uninflated seat cushion airbag 160 as viewed from above.

The second end portion 122 of the duct 120 is disposed in a position that does not overlap a position of the seat cushion airbag 160 as viewed from above. More specifically, the second end portion 122 of the duct 120 is disposed rearward of the uninflated seat cushion airbag 160.

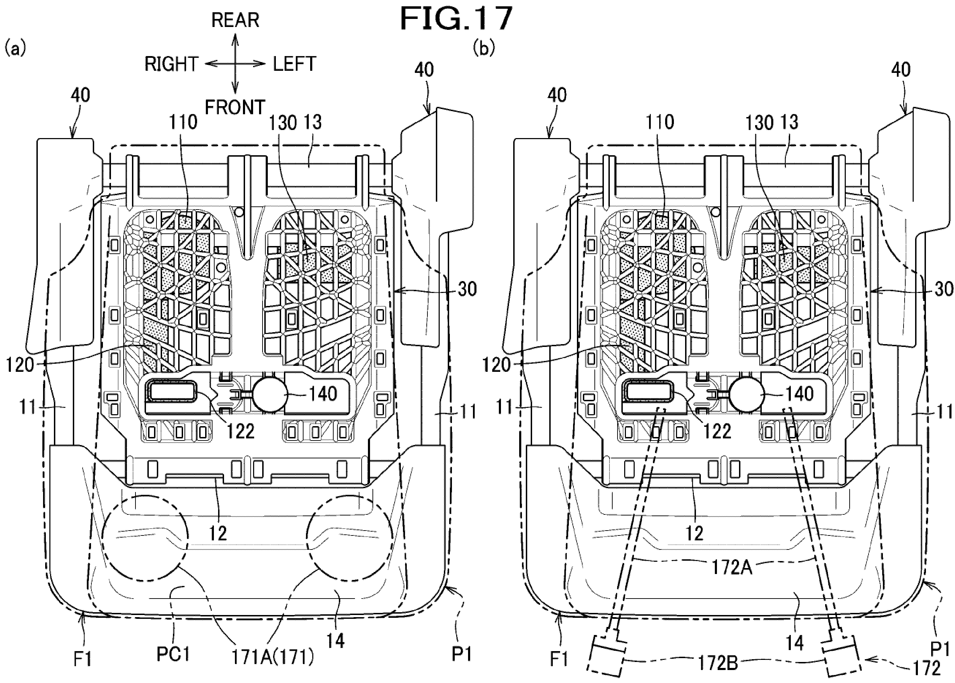

As shown in FIG. 17 (a) and (b), the car seat S may be configured to comprise vibration generators 171, 172. For example, the vibration generator 171 comprises two eccentric motors 171A as in the fourth modification shown in FIG. 17 (a). The eccentric motors 171A are, for example, each disposed in a left or right recess formed on a front portion of the first central portion PC1 of the seat cushion pad P1.

The blower 110, the duct 120, the ECU 130 and the sensor 140 are each disposed in a position that does not overlap positions of the eccentric motors 171A as viewed from above. More specifically, the blower 110, the duct 120, the ECU 130, and the sensor 140 are each disposed rearward of the eccentric motors 171A as viewed from above.

The vibration generator 172 comprises vibration transmitting members 172A each having a shape of a rod and vibration outputting devices 172B that output vibrations to the vibration transmitting members 172A as in the fifth modification shown in FIG. 17 (b). The vibration transmitting members 172A are disposed inside the seat cushion pad P1.

The blower 110, the duct 120, the ECU 130, and the sensor 140 are each disposed in a position that does not overlap positions of the vibration transmitting members 172A as viewed from above. The blower 110, the duct 120, and the ECU 130 are each disposed rearward of the rear ends of the vibration transmitting members 172A as viewed from above. The sensor 140 is disposed between the rear ends of the two vibration transmitting members 172A as viewed from above.

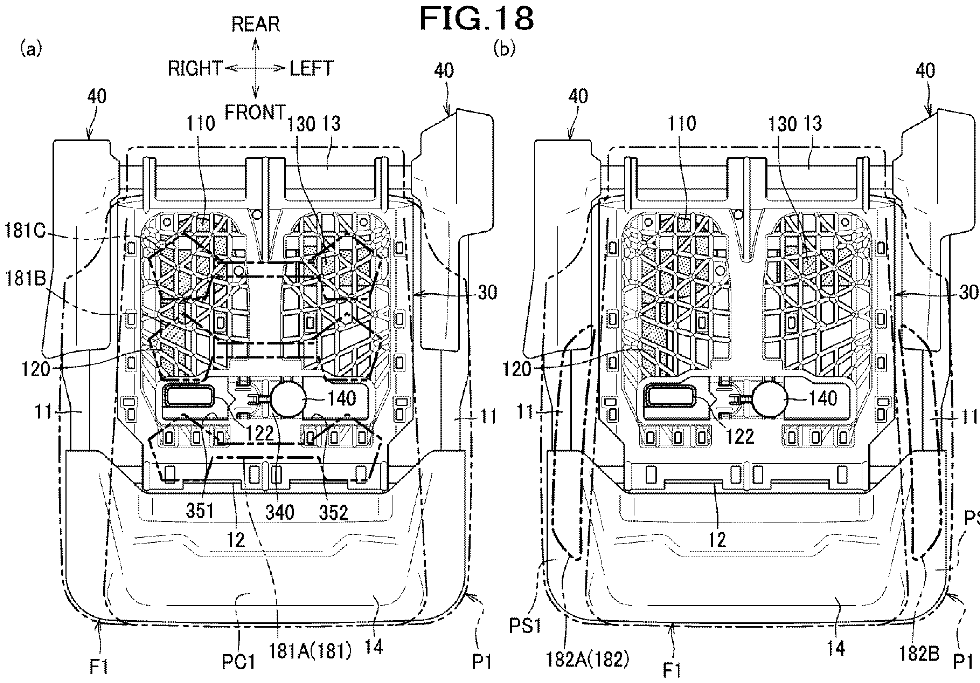

As shown in FIG. 18 (a) and (b), the car seat S may be configured to comprise a plurality of air pouches 181, 182. The car seat S comprising the air pouches 181, 182 may, for example change position at which the occupant is supported by adjusting the amount of air inside the air pouches 181, 182. The car seat S comprising the air pouches 181,182 provide the occupant with effects of, for example, massaging and awakening by repeatedly inflating and deflating the air pouches 181,182.

A plurality of the air pouches 181 are disposed between the central portion PC1 of the seat cushion pad P1 and the seat cushion outer covering SK1 as in the sixth modification shown in FIG. 18 (a). More specifically, the air pouches 181 include a first air pouch 181A, a second air pouch 181 B disposed rearward of the first air pouch 181A, and a third air pouch 181C disposed rearward of the second air pouch 181B.

The first air pouch 181A and the second air pouch 181B are disposed to sandwich the sensor mounting portion 340 and the through holes 351, 352 therebetween from the front and rear as viewed from above. The second end portion 122 of the duct 120 and the sensor 140 are each disposed in a position that does not overlap position of the air pouches 181 as viewed from above. More specifically, the second end portion 122 of the duct 120 and the sensor 140 are each disposed between the first air pouch 181A and the second air pouch 181B as viewed from above. The blower 110 may be disposed in a position that does not overlap the positions of the air pouches 181 as viewed from above. The ECU 130 may be disposed in a position that does not overlap the positions of the air pouches 181 as viewed from above.

The air pouches 182 are each disposed between each of the first side portions PS1 of the seat cushion pad P1 and the seat cushion outer covering SK1 as in the seventh modification shown in FIG. 18 (b). More specifically, the air pouches 182 include a right air pouch 182A disposed at the right first side portion PS1 and a left air pouch 182B disposed at the left first side portion PS1.

The blower 110, the duct 120, the ECU 130, and the sensor 140 are each disposed in a position that does not overlap positions of the air pouches 182 as viewed from above. More specifically, the blower 110, the duct 120, the ECU 130, and the sensor 140 are each disposed between the right air pouch 182A and the left air pouch 182B as viewed from above.

The second end portion 122 of the duct 120 and the sensor 140 are each disposed in a position that does not overlap the positions of the air pouches 182 as viewed from above. More specifically, the second end portion 122 of the duct 120 and the sensor 140 are each disposed between the right air pouch 182A and the left air pouch 182B as viewed from above.

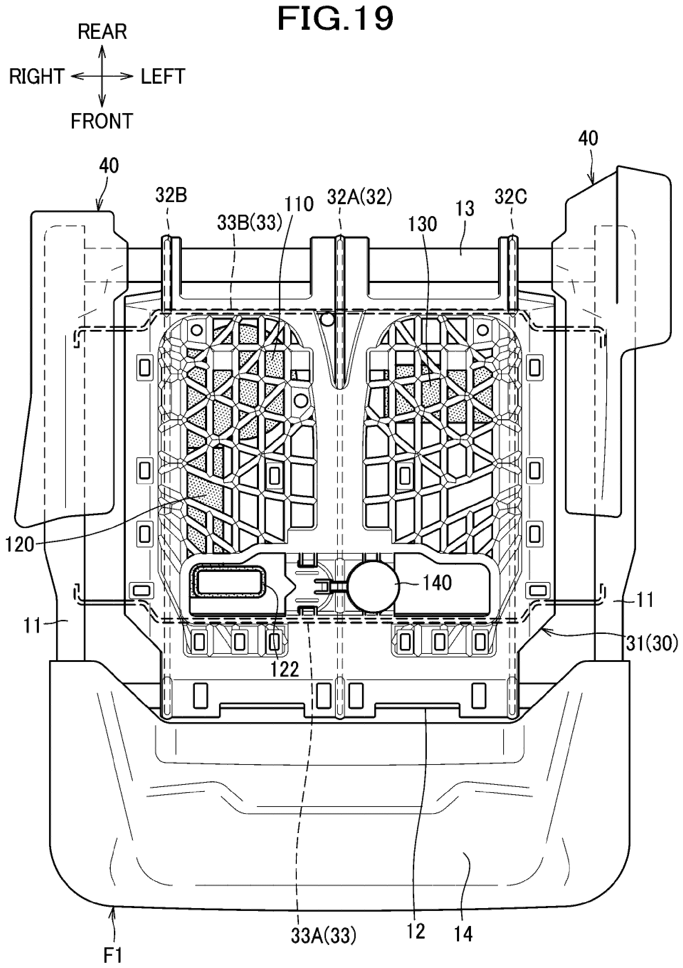

In the above-described embodiment, the longitudinal wire 32 bridging the front frame 12 and the rear frame 13 is given as an example of the first reinforcing wire; however, the first reinforcing wire may be a wire bridging the left and right first side frames 11. As one example, the lateral wire 33 as the first reinforcing wire includes a front wire 33A and a rear wire 33B as in the eighth modification shown in FIG. 19.

Each of the front wire 33A and the rear wire 33B extends in the lateral direction with a right end portion engaged with the first right side frame 11 and the left end portion engaged with the left first side frame 11. The central portions of the front wire 33A and the rear wire 33B in the lateral direction are each covered by the plastic member 31. The left and right end portions of the front wire 33A and the rear wire 33B may be covered by plastic and the like.

The blower 110, the duct 120, the ECU 130, and the sensor 140 are each disposed in a position that does not overlap a position of the lateral wire 33 as viewed from above. More specifically, the blower 110, the duct 120, the ECU 130, and the sensor 140 are each disposed between the front wire 33A and the rear wire 33B as viewed from above.

In a configuration in which the lateral wire 33 bridges the left and right first side frames 11, the longitudinal wire 32 (the wire extending in the front-rear direction) may not be configured to bridge the front frame 12 and the rear frame 13. The first pressure-receiving member may not be configured to comprise a wire extending in the front-rear direction.

In the above-described embodiment, the ECU 130 is mounted on the first pressure-receiving member 30; however, the ECU 130 may be mounted on a member other than the first pressure-receiving member 30. For example, the ECU 130 may be mounted on the seat frame F, such as on the first side frames 11.

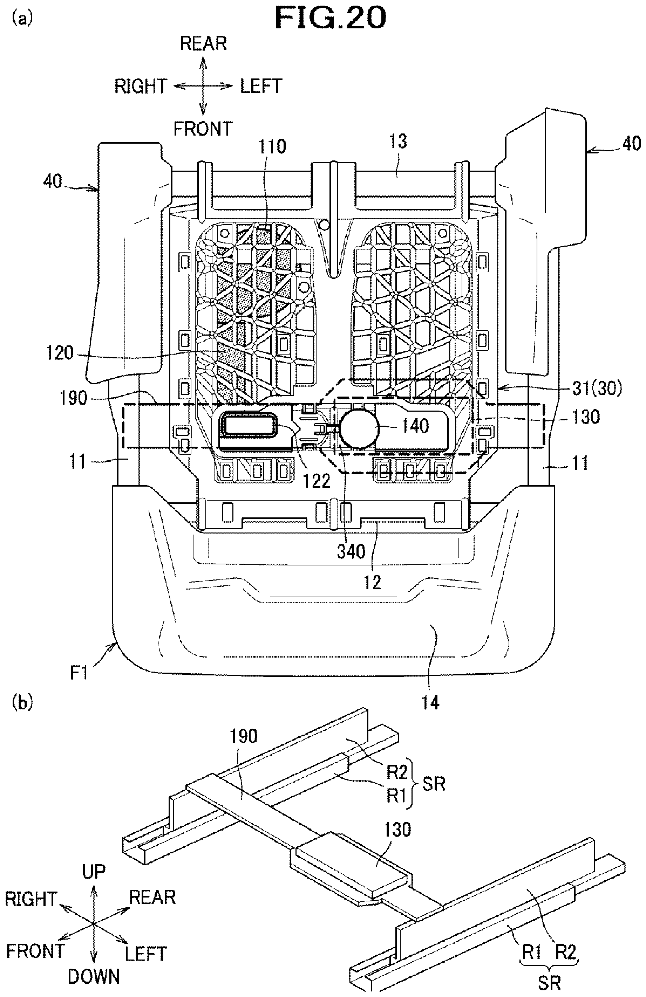

The car seat S may comprise a support member 190 mounted to the left and right upper rails R2 to bridge the left and right upper rails R2 and the ECU 130 may be mounted on the support member 190, as in the ninth modification shown in FIG. 20 (a) and (b). The support member 190 is, for example, made of sheet metal, plastic, etc. The ECU 130 is, for example, mounted on a top surface of the support member 190. The seat cushion S1, the supporting member 190, and the ECU 130 are slidable in the front-rear direction with the upper rail R2.

In the ninth modification, the blower 110 is mounted on the first pressure- receiving member 30 in the same manner as in the first embodiment. In the ninth modification, as shown in FIG. 20 (a), the blower 110 and the duct 120 are disposed in a position that does not overlap a position of the ECU 130 as viewed from above. In such a configuration, the blower 110 and the duct 120 can be disposed in a position that overlaps a position of the ECU 130 in the up-down direction; therefore, the car seat S can be made more compact in the up-down direction. The sensor 140 is disposed in a position that overlaps a position of the ECU 130 as viewed from above. The sensor 140 is disposed on a top surface of the sensor mounting portion 340 and the ECU 130 is disposed on a lower side of the sensor mounting portion 340.

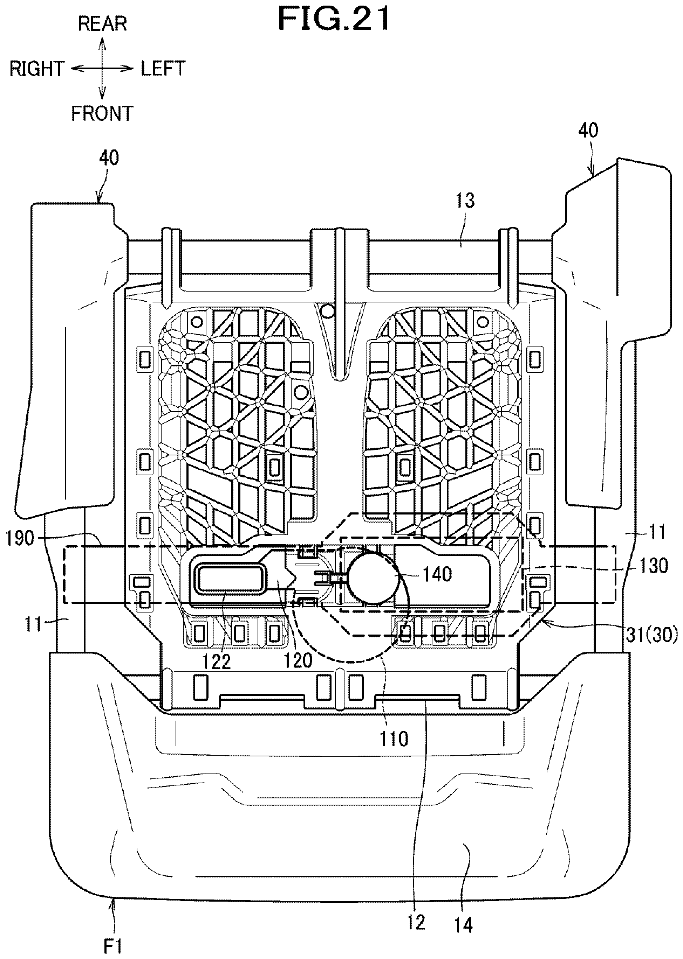

In the tenth modification shown in FIG. 21, the blower 110 is mounted on the first pressure-receiving member 30 in the same manner as in the second embodiment, and the ECU 130 is mounted on the support member 190 in the same manner as in the ninth modification (refer to FIG. 20 (b)). In the tenth modification, the blower 110 is disposed in a position that overlaps a position of the ECU 130 as viewed from above. More specifically, the blower 110 is disposed above the ECU 130. In such a configuration, the wiring connecting the blower 110 and the ECU 130 can be made shorter.

In the above-described embodiment, the blower mounting portion 390 is provided in the mesh portion 360 of the first pressure-receiving member; however, for example, the blower mounting portion may be provided on a portion of the first pressure-receiving member other than the mesh portion such as the side support portion, the sensor mounting portion, and the frame portion.

In the above-described embodiment, the wires 32 and 33 are configured to be entirely covered by the plastic member 31 (elastic member); however, the wires can be configured such that only a part of the wires are covered by the plastic member (elastic member). **In** other words, a part of the wires may be exposed from the plastic member (elastic member).

In the above-described embodiment, the side frame covers 40 are configured to cover the upper sides and the lateral inner sides of the rear end portions of the first side frames 11; however, for example, the side frame covers may be configured to cover only the lateral inner sides of the rear end portions of the first side frames. The car seat may be configured not to comprise the side frame covers.

In the above-described embodiment, the blower 110 is mounted directly on the plastic member 31 (elastic member); however, for example, the blower may be mounted on the elastic member via a bracket or other members.

In the above-described embodiment, the sensor 140 is disposed in a position that does not overlap the position of the duct 120 as viewed from above; however, the sensor may be disposed in a position that overlaps the position of the duct as viewed from above.

In the above-described embodiment, the position of the second end portion 122 of the duct 120 (the portion at which the duct and the air passage are connected) in the front-rear direction overlaps the position of the sensor 140 in the front-rear direction; however, for example, a position of the portion at which the duct and the air passage are connected in the front-rear direction may overlap a position of the sensor in the front-rear direction.

For example, the blower, the blower mounting portion, the duct, the ECU (controller), and the sensor may be located in a position symmetrical to the above-described embodiment and the modifications.

In the above-described embodiment, the sensor 140 is a pressure sensor; however, the sensor may be, for example, a temperature sensor, a humidity sensor, a sound sensor, a light sensor, a pulse sensor, a breath sensor, a sensor for detecting a movement of the occupant, or a sensor for detecting an amount of perspiration of the occupant.

In the above-described embodiment, the car seat S is configured to blow out air from the top surface of the seat cushion S1; however, for example, the car seat S can be configured to suck in air from the top surface of the seat cushion.

In the above-described embodiment, the invention is applied to the seat cushion S1; however, for example, it can be applied to the seat back. When the invention is applied to the seat back, the front side corresponds to the "occupant side" and the rear side corresponds to the "side opposite to the occupant side". When the invention is applied to the seat back, the "side frames" can be configured to be elongate in the up-down direction perpendicular to the lateral direction.

Next, a third embodiment will be described. Descriptions of materials, shapes, and sizes of the components that constitute the vehicle seat in the following description are only one example and do not limit the invention.

In the following description, a car seat installed in a car will be given as an example of a vehicle seat, and an example of a structure of the car seat will be described.

In the following description, "front-rear seat direction" is a front-rear direction of the vehicle seat, and is a direction that corresponds to the direction of movement of the car when the car is driven. Further, "seat width direction" is a width direction of the vehicle seat, and is a direction that corresponds to the left-right (lateral) direction as viewed from an occupant seated on the vehicle seat. In addition, "up-down direction" is an up-down direction of the vehicle seat and is a direction that corresponds to the vertical direction when the car is being driven on a horizontal surface. When simply using the word "outer side" it means a side closer to the outside in a direction from the center of an individual vehicle seat toward the outside and the "inner side" means a side closer to the center of an individual vehicle seat in a direction from the outside toward the center of the vehicle seat.

In the following description, shapes, positions, and postures of each part of the vehicle seat are described assuming that the vehicle seat is in the position for sitting, unless specifically stated otherwise.

### <Car seat S>

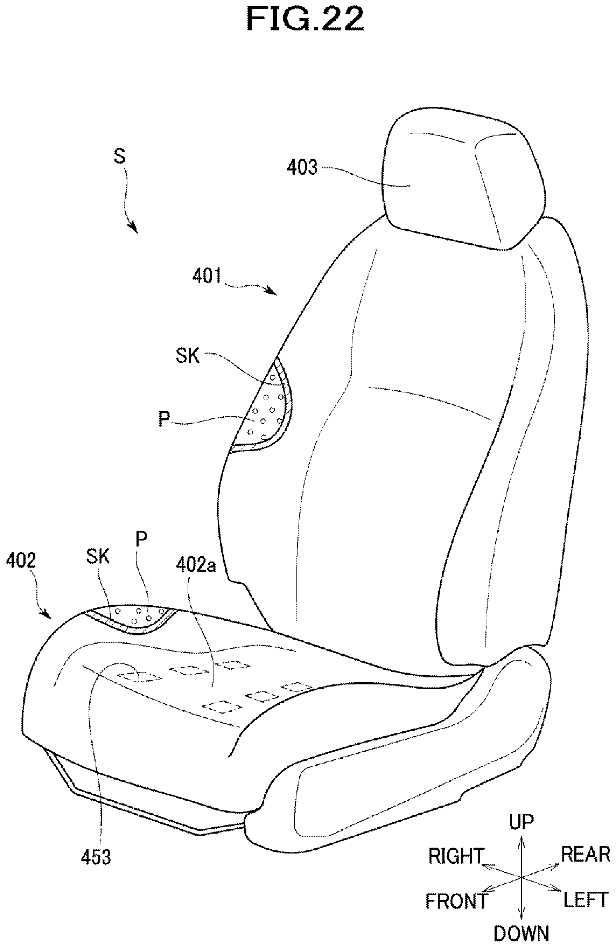

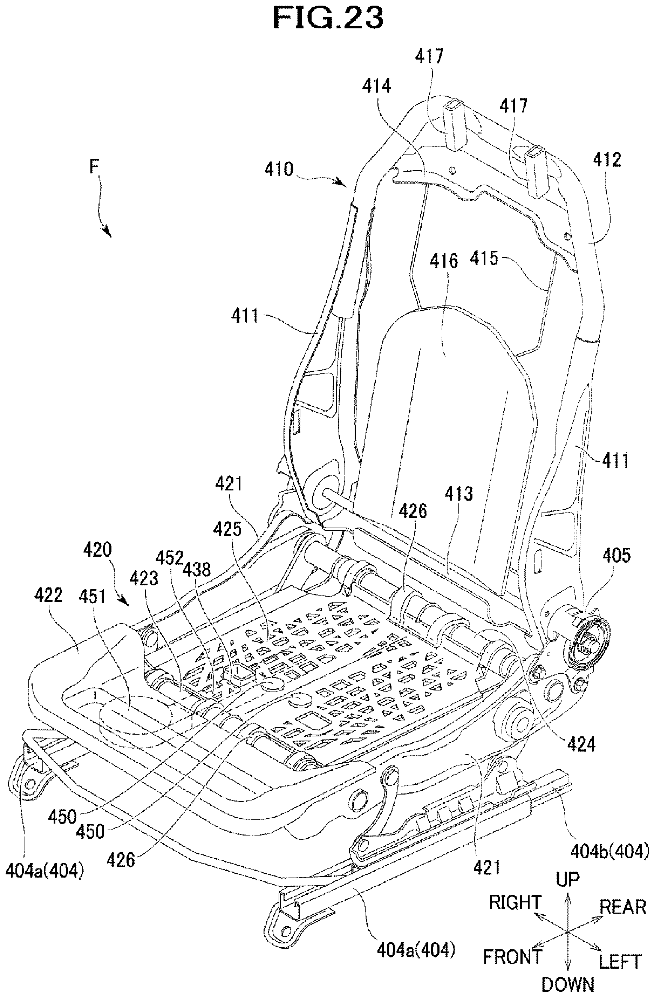

The basic structure of the vehicle seat will be described with reference to FIG. 22 and FIG. 23. FIG. 22 is a perspective view of the car seat S, and for the sake of illustration, the outer covering SK has been removed from a part of the car seat S in the illustration. FIG. 23 is a perspective view of a seat frame F of the car seat S.

The car seat S is a seat placed on a floor of the car and is a seat on which a passenger of the car (hereinafter, also referred to as an occupant) is seated. In the present embodiment, the car seat S is used as a front seat corresponding to a front seat of the car. However, the car seat S is not limited to the front seat of the car, and can be used as a rear seat. In a car having three rows of seats arranged in the front-rear direction, the car seat S can also be used as a middle seat in the second row and a rear seat in the third row.

As shown in FIG 22, the car seat S mainly comprises a seat back 401 configured to support the back of the occupant, a seat cushion 402 configured to support the buttocks of the occupant, and a headrest 403 disposed above the seat back 401 and configured to support the head of the occupant. The seat back 401, the seat cushion 402, and the headrest 403 are sometimes collectively referred to as a seat body.

The seat back 401 is configured by placing a pad P over a back frame 410 that forms a framework and then covering the pad P with an outer covering SK. The seat cushion 402 is configured by placing a pad P over a seat cushion frame 420 that forms a framework and then covering the pad P with an outer covering SK.

The headrest 403 is provided above the seat back 401 and is configured by placing a pad P on a headrest frame that forms a core and covering the pad P with an outer covering SK.

The car seat S comprises a rail device 404 that supports the seat body in a manner that allows the seat body to move in a front-rear direction with respect to the car floor (refer to FIG. 23). The rail device 404 is a device for sliding the seat body along the front-rear direction, and has a structure known in the art (a structure of a typical rail device). The rail device 404 comprises a lower rail 404a fixed to the floor of the car and an upper rail 404b slidable with respect to the lower rail 404a.

The car seat S comprises a reclining mechanism 405 configured to tilt the seat back 401 with respect to the seat cushion 402 (refer to FIG. 23). The reclining mechanism 405 is provided between the seat back 401 and the seat cushion 402. The angle of inclination of the seat back 401 with respect to the seat cushion 402 is adjustable by the reclining mechanism 405.

### <Seat frame F>

A seat frame F shown in FIG. 23 is provided inside the car seat S. The seat frame F is a member that forms a framework of the car seat S and mainly comprises a back frame 410 forming a framework of the seat back 401 and a cushion frame 420 forming a framework of the seat cushion 402.

### <Back frame 410>

As shown in FIG. 23, the back frame 410 as a whole is formed in a shape of a rectangular frame. The back frame 410 comprises a pair of back side frames 411, 411 disposed left and right, an upper frame 412, and a lower frame 413. The upper frame 412 is disposed between the pair of back side frames 411, 411, and connects upper ends of the pair of back side frames 411, 411. The lower frame 413 is disposed between the pair of back side frames 411, 411, and connects lower ends of the pair of back side frames 411. A connecting frame 414 at an upper portion of the back frame 410 connects the left and right end portions of the upper frame 412.

A pressure-receiving member 416 for the seat back is disposed below the connecting frame 414. The pressure-receiving member 416 is configured to support the back of the occupant. The pressure-receiving member 416 is connected to the connecting frame 414 via a wire member 415. The pressure-receiving member 416 is a plate member having flexibility and supports the back of the occupant from the rear. The pressure-receiving member 416 is made of plastic; however, the pressure-receiving member 416 may be made of metal.

Pillar supports 417 are provided on the upper frame 412, into which headrest stays of the headrest 403 are inserted. It is desirable for the pillar supports 417 to be made of metal to stably support the headrest 403. The pillar supports 417 are not limited to being made of metal and may be made of plastic.

The pair of back side frames 411, 411 are disposed on the left and right of the back frame 410 as described above, and are members that are basically symmetrical. The pair of back side frames 411, 411 are members elongate in the up-down direction of the seat, and the pair of back side frames 411, 411 are formed such that the width in the front-rear seat direction increases from the upper side of the seat toward the lower side of the seat.

### <Cushion frame 420>

The cushion frame 420 is formed in a shape of a rectangular frame as viewed from above. The cushion frame 420 comprises a pair of cushion side frames 421, 421 disposed laterally apart from each other. The pair of cushion side frames 421, 421 are members elongate in the front-rear seat direction, and are configured to be basically symmetrical.

The cushion frame 420 comprises a pan frame 422 located at a front end portion of the cushion frame 420, a frontward connecting frame 423 configured to connect the pair of cushion side frames 421, 421 at front end portions thereof, and a rearward connecting frame 424 configured to connect the pair of cushion side frames 421, 421 at rear end portions thereof. The frontward connecting frame 423 and the rearward connecting frame 424 are configured by round pipes.

A blower 451 is provided below the pan frame 422. A duct 452 is connected to the blower 451, and air can be sent through the duct 452 to an air outlet 453 formed on the occupant surface 402a of the seat cushion 402.

### <Pressure-receiving member 425>

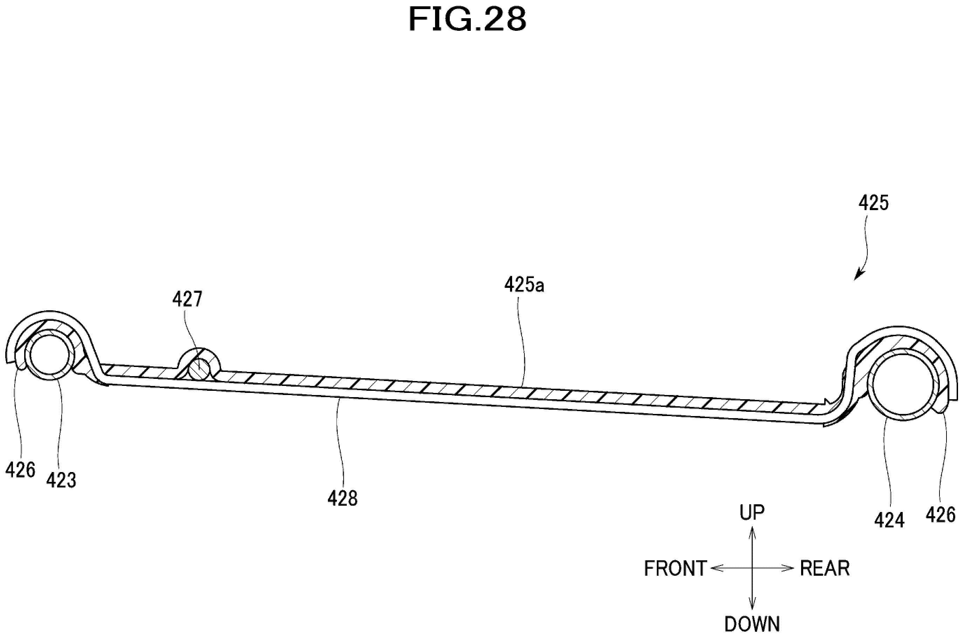

The pressure-receiving member 425 is a member configured to support the seated occupant. As shown in FIG. 23, the pressure-receiving member 425 is formed in a shape of a plate. Hooks 426 are provided at a front end and a rear end of the pressure-receiving member 425. The hooks 426 are formed approximately in a shape of an arc extending from the front end and the rear end of the pressure-receiving member 425 and protruding upward (refer to FIG. 28).

The hooks 426 at the front end of the pressure-receiving member 425 are hung on the frontward connecting frame 423 and the hooks 426 at the rear end of the pressure-receiving member 425 are hung on the rearward connecting frame 424. The pressure-receiving member 425 is formed of soft elastomer plastic, and supports the occupant by receiving the load of the occupant from below.

Conventionally, the pressure-receiving member that supports the occupant is formed of metal or hard plastic. However, as cars are electrified, the height of the seats are reduced to mount a battery on the car floor, which require the pads to be made thinner. Therefore, it is desirable to form the pressure-receiving member that supports the occupant with soft material in order to provide cushioning properties to the pressure-receiving member.

On the other hand, if the pressure-receiving member is made of soft material, there is a possibility that the pressure-receiving member will flex due to motion such as the acceleration and deceleration of the car body.

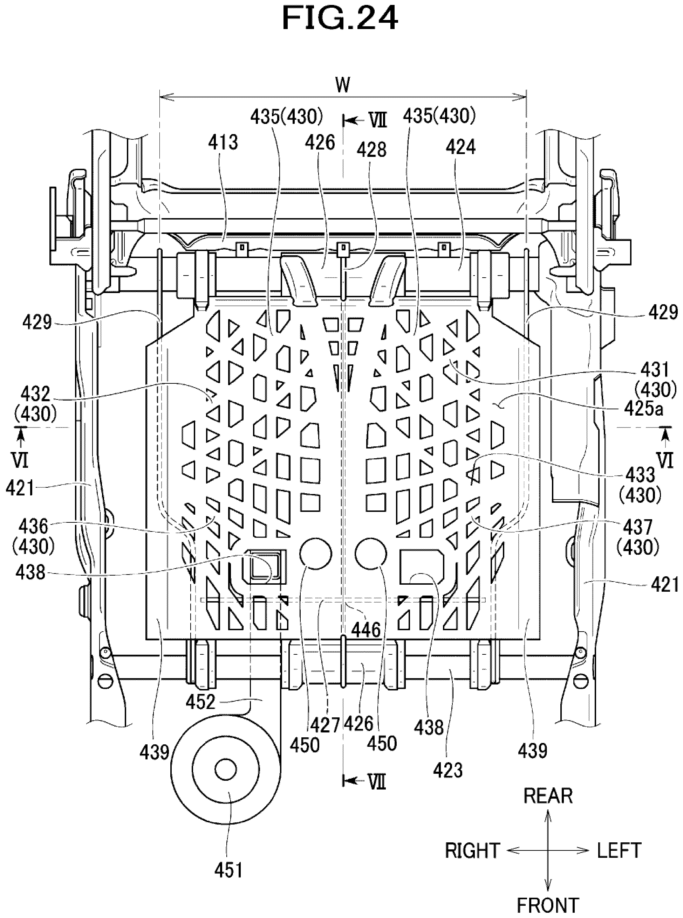

The pressure-receiving member 425 provided in the car seat S of the present embodiment is formed of an elastically deformable elastomer resin (elastic material). As shown in FIG. 24, the pressure-receiving member 425 comprises a plurality of linear portions 430 forming a mesh-shaped support surface 425a.

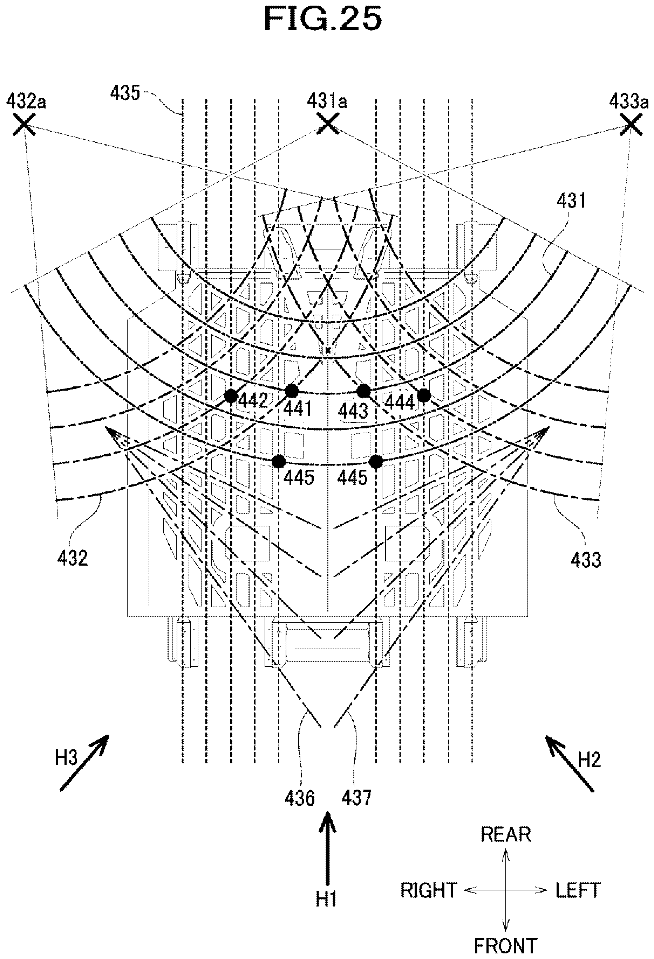

The plurality of linear portions 430 will be described with reference to FIG. 25. The plurality of linear portions 430 includes first arc portions 431 formed in a shape of an arc (shown by the chain double dotted lines in FIG. 25), and second arc portions 432 and third arc portions 433 formed in a shape of an arc and intersecting the first arc portions 431 (shown by dash-dotted lines in FIG. 25). The plurality of linear portions 430 includes straight portions 435 (shown by dotted lines in FIG. 25), and right inclined portions 436 and left inclined portions 437 extending in a direction inclined with respect to the front-rear direction (shown by dash-dotted lines in FIG. 25).

In other words, the first arc portions 431, the second arc portions 432, the third arc portions 433, the straight portions 435, the right inclined portions 436, and the left inclined portions 437 are each made up of a plurality of linear portions 430, and these intersect to form the mesh-shaped support surface 425a.

### <First arc portions 431>

The first arc portions 431 are arranged such that convex parts of arcs forming the first arc portions 431 face toward the front. The pressure-receiving member 425 can withstand a load exerted from the front side opposite to the convex direction (arrow H1 in FIG. 25) by an arching effect of the first arc portions 431. Therefore, for example, if a load is exerted from the front side upon acceleration of the car, the pressure-receiving member 425 can be restrained from flexing in the front-rear direction.

A first center 431a of the arcs forming the first arc portions 431 is located outside of an area occupied by the pressure-receiving member 425, as shown in FIG. 25. The first center 431a is located on a center line of the pressure-receiving member 425 in the lateral direction, and the first arc portions 431 are comprised of a plurality of linear portions 430 extending along arcs having the first center 431a as a center.

### <Second arc portions 432>

The second arc portions 432 are arranged such that convex parts of arcs forming the second arc portions 432 face an obliquely leftward-and-frontward direction. The pressure-receiving member 425 can, for example, withstand a load exerted from the obliquely leftward-and-frontward direction (arrow H2 in FIG. 25) by the second arc portions 432. Therefore, the pressure-receiving member 425 can be restrained from flexing in the obliquely leftward direction.

A second center 432a of the arcs forming the second arc portions 432 is located at a position obliquely rightward-and-rearward of the pressure-receiving member 425 outside of the area occupied by the pressure-receiving member 425. The second arc portions 432 are comprised of a plurality of linear portions 430 extending along arcs having the second center 432a as a center, and intersect the first arc portions 431 at a plurality of intersections (such as a first intersection 441). In a close proximity of the intersections of the second arc portions 432 and the first arc portions 431, the pressure-receiving member 425 can withstand a load by both of the second arc portion 432 and the first arc portions 431, and thus can restrain flexing in a plurality of directions. The second arc portions 432 are also arranged to intersect the straight portions 435 at a plurality of intersections (such as a second intersection 442).

### <Third arc portions 433>

The third arc portions 4333 are arranged such that convex parts of arcs forming the third arc portions 433 face an obliquely rightward-and-frontward direction. The pressure-receiving member 425 can withstand load exerted from, for example, the obliquely rightward-and-frontward direction (direction of arrow H3) by the third arc portion 433. Therefore, the pressure-receiving member 425 can be restrained from flexing obliquely in the rightward direction.

The third arc portions 433 are arranged symmetrical to the second arc portions 432 about the center line of the pressure-receiving member 425 in the front-rear direction. Since the second arc portions 432 and the third arc portions 433 are arranged symmetrically, the pressure-receiving member 425 can be restrained from flexing obliquely in the leftward direction and in the rightward direction.

A third center 433a of the arcs forming the third arc portions 433 is located at a position obliquely leftward-and-rearward of the pressure-receiving member 425 outside of the area occupied by the pressure-receiving member 425. The third arc portions 433 are comprised of a plurality of linear portions 430 extending along arcs having the third center 433a as a center, and intersect the first arc portions 431 at a plurality of intersections (such as a third intersection 443). In a close proximity of the intersections of the third arc portions 433 and the first arc portions 431, the pressure-receiving member 425 can withstand a load by both of the third arc portions 433 and the first arc portions 431, and thus can restrain flexing in a plurality of directions. The third arc portions 433 are also arranged to intersect the straight portions 435 at a plurality of intersections (such as a fourth intersection 444).

The first center 431a, the second center 432a, and the third center 433a of each of the arcs forming the first arc portions 431, the second arc portions 432, and the third arc portions 433 are located outside of the area occupied by the pressure-receiving member 425, as described above. Since the first center 431a, the second center 432a, and the third center 433a are located outside of the area occupied by the pressure-receiving member 425, a radius of curvature of each of the arcs can be made larger compared to an alternative configuration in which the centers are located inside of the area occupied by the pressure-receiving member 425. In other words, the linear portions can be formed in a shape of a fan having a gentle arc. Therefore, the pressure-receiving member 425 can be made, for example, in a shape appropriate for withstanding a load to further restrain flexing of the pressure-receiving member 425.

### <Straight portions 435>

The straight portions 435 are linear portions 430 arranged to extend straight in the front-rear seat direction. By providing the straight portions 435 extending in the front-rear direction of the car seat S stretching (flexing) of the pressure-receiving member 425 in the front-rear direction can be restrained when the occupant is seated.

As shown in FIG. 25, the straight portions 435 intersect the first arc portions 431 at a plurality of intersections (such as a fifth intersection 445).

The straight portions 435 disposed on the right side of the central portion of the pressure-receiving member 425 intersect the second arc portions 432 at a plurality of intersections (such as the second intersection 442).

The straight portions 435 disposed on the left side of the central portion intersect the third arc portions 433 at a plurality of intersections (such as the fourth intersection 444). Since the straight portions 435 and the first arc portions 431, the second arc portions 432, and the third arc portions 433 intersect, the stretching (flexing) of the pressure-receiving member 425 when the occupant is seated can be more efficiently restrained.

### <Right inclined portions 436>

The right inclined portions 436 configured by linear portions 430, arranged to extend in a direction inclined with respect to the front-rear direction, are provided frontward of the second arc portions 432. The right inclined portions 436 extending obliquely in the rightward-and-rearward direction from an obliquely leftward-and-frontward position toward are provided; therefore, the pressure-receiving member 425 can withstand a load input obliquely rightward-and-rearward from the obliquely leftward-and-frontward position and flexing can thereby be restrained.

### <Left inclined portions 437>

The left inclined portions 437 configured by linear portions 430, arranged to extend in a direction inclined with respect to the front-rear direction, are provided frontward of the third arc portion 433. Since he left inclined portions 437 extending obliquely in a leftward-and-rearward direction from the obliquely rightward-and-frontward position are provided, the pressure-receiving member 425 can withstand a load input obliquely leftward-and-rearward from the obliquely rightward-and-frontward position, and flexing can thereby be restrained.

As described above, the supporting surface 425a of the pressure-receiving member 425 is configured from a plurality of linear portions 430 extending in a shape of an arc or in a straight line. Since the linear portions 430 are arranged in a mesh-shape, flexing that may be caused by loads exerted from various directions can be restrained. Arrangements including linear portions having a shape of an arc further have the following advantageous effects.

When the occupant is seated on the car seat S, the buttocks of the occupant contact the cushion seat, and the occupant may feel numbness or pain due to pressure on their buttocks. The cause of such numbness or pain is said to be lack of oxygen due to inhibition of blood flow, and can be reduced by making the seat cushion contact the buttocks in a manner that allows blood to flow more easily. In the present embodiment, an attempt is made to suppress the occurrence of numbness and pain while seated by arranging the linear portions 430 forming the support surface 425a of the pressure-receiving member 425 to conform to the shape of the muscles and the body.

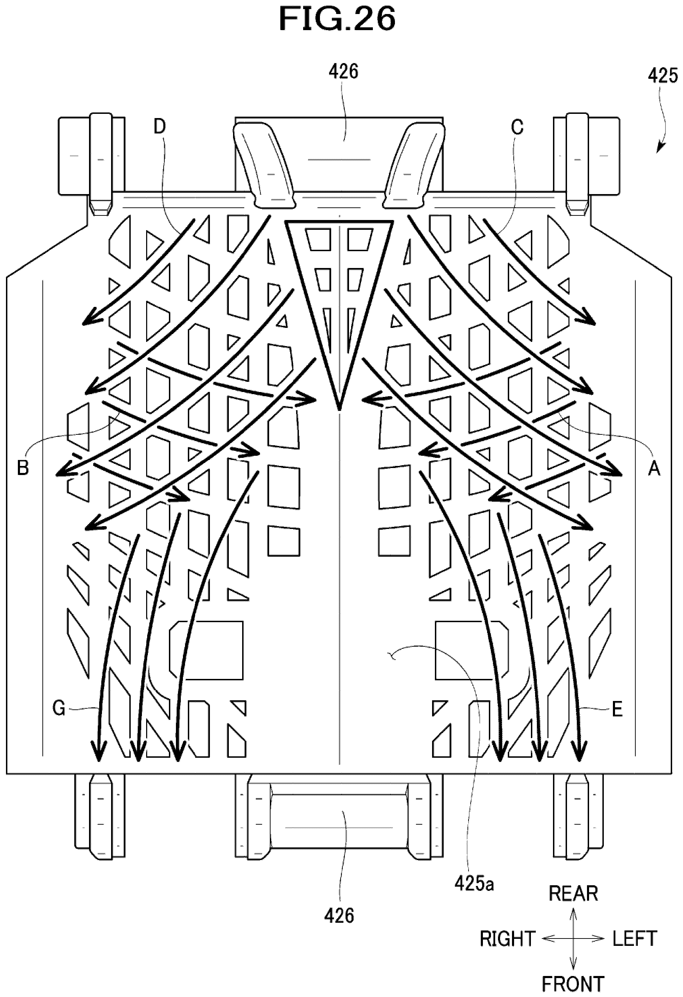

For example, the first arc portion 431 is formed along the piriformis muscles of the occupant which extend in directions of arrows A and arrows B shown in FIG. 26 when seated. The second arc portions 432 and the third arc portions 433 are formed along the gluteus maximus muscles or the gluteus medius muscles of the occupant which extend in directions of arrows C and arrows D shown in FIG. 26.

The straight portions 435 are formed along the hamstrings of the occupant which extend in directions of arrows E and arrows G shown in FIG. 26.

In this way, by the meshes of the pressure-receiving member 425 conforming to the shape of the muscle fibers of the occupant, numbness and pain while seated can be reduced. In particular, when the pad P becomes thinner, the influence of the pressure-receiving member 425 becomes greater, and the above advantageous effect becomes more pronounced.

### <Pressure sensors 450>

As shown in FIG. 24, pressure sensors 450 configured to detect the seated state of the occupant are provided on the pressure-receiving member 425. The pressure sensors 450 are disposed in the front portion of the pressure-receiving member 425 at an approximately central portion thereof in the lateral direction.

A lateral wire 427 arranged to extend in the seat width direction (lateral direction) is provided on the pressure-receiving member 425. As shown in FIG. 24, the lateral wire 427 is disposed in a close proximity of the pressure sensors 450. Since the lateral wire 427 is disposed in a close proximity of the pressure sensors 450, the pressure-receiving member 425 can be restrained from bending more than necessary when the occupant is seated, and the pressure sensor 450 can be restrained from not operating properly. In addition, as shown in FIG. 28 the lateral wire 427 is embedded in the pressure-receiving member 425. The lateral wire 427 is provided inward of the side portions of the pressure-receiving member 425, in more detail, inward of side wires 429. The lateral wire 427 may extend beyond the side portions of the pressure-receiving member 425 to the cushion side frames 421, 421, and be connected to the cushion side frames 421, 421.

A central wire 428 (longitudinal wire) extending in the front-rear direction is provided on the central portion of the pressure-receiving member 425 in the lateral direction. The lateral wire 427 and the central wire 428 intersect each other perpendicularly at the sixth intersection 446; therefore, stretching and flexing of the pressure-receiving member 425 can be efficiently reduced while the occupant is seated.

Two pressure sensors 450 are disposed on the pressure-receiving member 425 in a close proximity of the sixth intersection 446 where the lateral wire 427 and the central wire 428 intersect each other. The pressure sensors 450 are disposed in a position where stretching of the pressure-receiving member 425 is efficiently reduced by the lateral wire 427 and the central wire 428; therefore, the occurrence of malfunctions of the pressure sensors 450 can be reduced. The central wire 428 may be disposed between the two pressure sensors 450.

The pressure sensor 450 may be disposed above the lateral wire 427 or the central wire 428. The lateral wire 427 or the central wire 428 may be bent downward to form a recess, and the pressure sensor 450 may be disposed inside the recess.

The thickness Ta of the pressure-receiving member 425 is about 8 mm at a portion where the lateral wire 427 or the central wire 428 is inserted, and about 6 mm at other portions where wires are not inserted. In positions of the pressure-receiving member 425 where rigidity is not required, the pressure-receiving member 425 may be made thinner, for example, a thickness of about 3 mm.

In electric automobiles or the like, batteries may be disposed underneath the floor of the car body, and heat may be generated from the battery. To reduce such heat from below from being transmitted to the occupant, an insulating material (not shown) can be disposed above the pressure-receiving member 425, for example, between the pressure-receiving member 425 and the pad P.

### <Blower 451 and duct 452>

As shown in FIG. 24, a blower 451 is provided on the under surface of the seat cushion 402, and air can be sent from the blower 451 toward the occupant by a duct 452 extending from the blower 451. The blower 451 is provided on a lower surface of the pan frame 422. The duct 452 extends from the blower 451 and is connected to air outlets 453 provided on the occupant surface 402a of the seat cushion 402 (refer FIG. 22).

Through holes 438 are formed on the pressure-receiving member 425 beside the pressure sensors 450, and the duct 452 can be connected to air outlets 453 provided on the occupant surface 402a by inserting the duct 452 in one of the through holes 438. The through holes 438 are provided on both the left side and the right side of the pressure sensors 450; therefore, the pressure-receiving member 425 can be mounted on either the driver's seat or the passenger's seat. In other words, the duct 452 can be connected to the air outlet 453 by inserting the duct 452 into the through hole 438 located on a proximate side, whether the blower 451 is disposed on the left side or the right side of the pan frame 422. To reinforce structures surrounding the through holes 438, the through holes 438 are provided in a close proximity of the sixth intersection 466 of the lateral wire 427 and the central wire 428. In other words, the lateral wire 427 and the central wire 428 are provided in the structures surrounding the through holes 438.

### <Side wires 429>

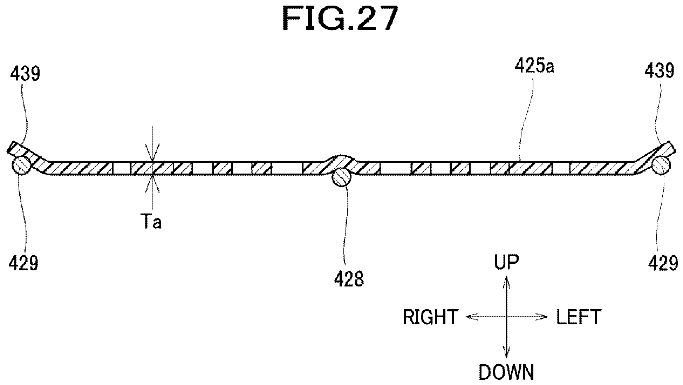

As shown in FIG. 27, wing-shaped portions 439, 439 which restrain slipping of the pad are provided on both sides of the pressure-receiving member 425. The wing-shaped portions 439, 439 are formed by the side portions of the pressure-receiving member 425 being lifted upward. Side wires 429, 429 extending in the front-rear seat direction are provided below the wing-shaped portions 439, 439, and the side wires 429, 429 reinforce the pressure-receiving member 425 to restrain the 425 from flexing in the up-down direction.

A distance W between the pair of side wires 429, 429 does not need to be constant, and the pair of side wires 429, 429 may be formed such that the distance W becomes narrower part way from the rear toward the front and the pair of side wires 429, 429 are located closer to the end portions of the lateral wire 427, as shown in FIG. 24.

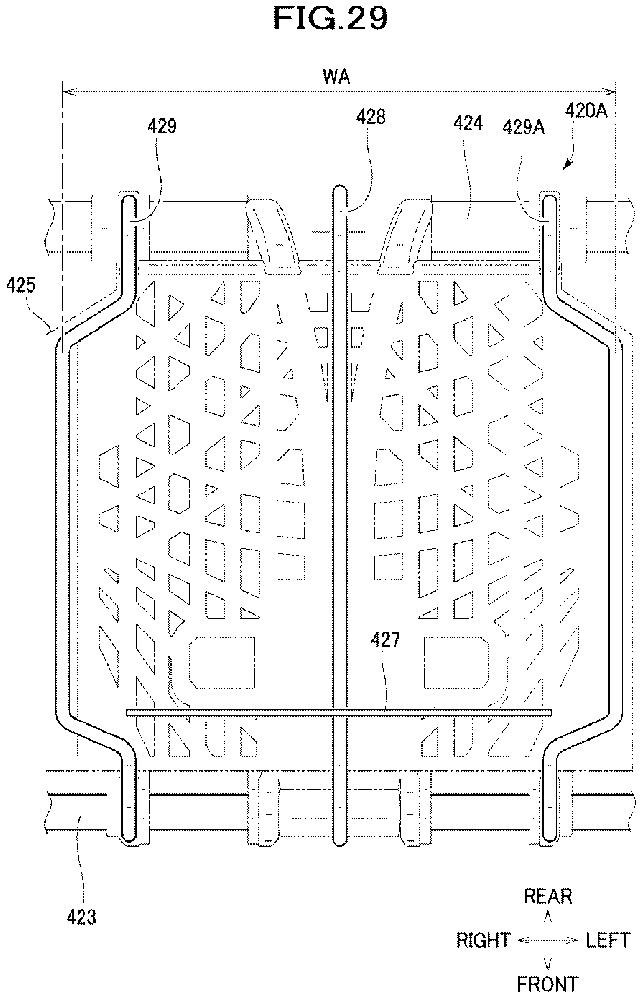

The shape of the side wires 429, 429 are not limited to the above, and for example, as in a pair of side wires 429A, 429A shown in FIG. 29, a distance WA between the pair of side wires 429A, 429A may be made narrower in a close vicinity of the front connection frame 423 and the rear connection frame 424 to which they are connected.

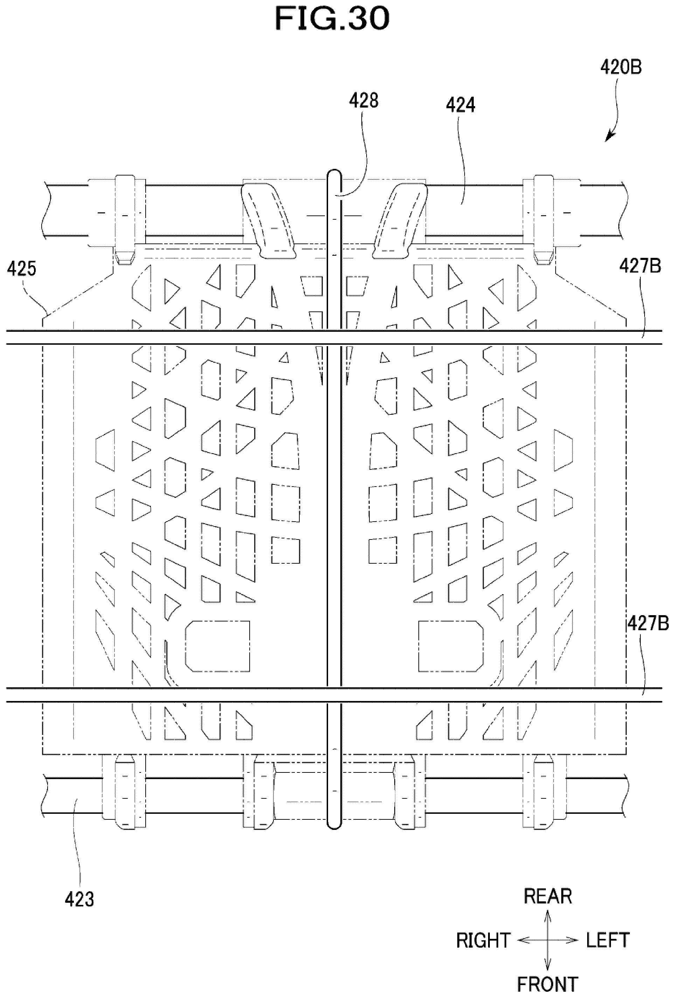

As shown in FIG. 30, a pair of lateral wires 427B, 427B extending in the lateral direction of the seat may be provided, and end portions of the lateral wires 427B, 427B may be engaged with the cushion side frames 4212, 421. The pressure-receiving member 425 can thereby be mounted on the cushion frame 420 even if the seat frame F is not provided with the front connecting frame 423 and the rear connecting frame 424.

In the present embodiment, the pressure-receiving member 425 is engaged with the front connecting frame 423 and the rear connecting frame 424 which connect the cushion side frames 421, 421; however, the front side of the pressure-receiving member 425 may be mounted on the pan frame 422. In a state where the pressure-receiving member 425 is engaged with the pan frame 422, a portion formed in a shape of a pipe may be added to the pan frame 422, and the ends of the pressure-receiving member 425 may be engaged thereof.

The recesses on the lower side of the pan frame 422 (a surface on which harness clips are mounted on) can be substituted by the pressure-receiving member 425. A wire may be provided to extend from a front edge of the pressure-receiving member 425 and form a shape of a hook on which the harness clips are to be mounted. The front edge of the pressure-receiving member 425 may be formed in a shape of an S-shaped spring. Portions of the pan frame 422 may be raised, and engaging portions that engage with the raised portion may be provided on the pressure-receiving member 425. A barb may be formed on the engaging portions.

The present embodiment has been described above with reference to the figures. The embodiments described above are merely examples for better understanding of the present invention and does not limit the present invention. In other words, the shape, size, arrangement, etc. described in the present embodiments may be changed and modified, and equivalents thereof are of course included in the present invention within the intended scope of the embodiments.

The pressure-receiving member 425 mounted on the cushion frame 420 is described as an example of a pressure-receiving member comprising a plurality of linear portions; however, the pressure-receiving member 425 can be mounted on the back frame 410 of the seat back 401 to support the back of the occupant. In this case, the straight portions 435 forming the support surface 425a are formed to extend in the up-down direction. The central wire 428 (longitudinal wire) that runs through the central portion of the pressure-receiving member 425 is arranged to extend in the up-down direction.

In the above-described embodiment, the car seat S to be installed in an automobile is given as an example of a vehicle seat; however, the vehicle seat may be a vehicle seat installed in vehicles other than automobiles, such as railroad cars, ships, airplanes, etc. The invention can also be applied, for example, to a seat for use at home.

The elements described in the above embodiment and its modifications may be implemented selectively and in combination.

## Claims

1. A vehicle seat comprising:
a seat frame including left and right side frames disposed laterally apart from each other;
a pressure-receiving member disposed between the left and right side frames, the pressure-receiving member configured to support an occupant; and
a blower mounted on the pressure-receiving member,
wherein the pressure-receiving member includes an elastic member having elasticity, and
wherein the blower is mounted on the elastic member.

2. The vehicle seat according to claim 1, wherein the pressure-receiving member has a shape of a plate.

3. The vehicle seat according to claim 2, wherein the elastic member is made of elastomer.

4. The vehicle seat according to claim 3, wherein the pressure-receiving member comprises the elastic member and a wire covered by the elastic member.

5. The vehicle seat according to any one of claims 1 to 4, wherein the pressure-receiving member comprise a mounting portion configured to mount members other than the blower to the pressure-receiving member, and
wherein the blower is disposed in a position that does not overlap a position of the mounting portion as viewed from an occupant side.

6. The vehicle seat according to claim 5, comprising:
a pad configured to cover the seat frame, the pad including an air passage formed therein; and
a duct configured to connect the blower and the air passage,
wherein the duct is disposed in a position that does not overlap the position of the mounting portion as viewed from the occupant side.

7. The vehicle seat according to any one of claims 1 to 4, comprising:
a pad configured to cover the seat frame, the pad including an air passage formed therein; and
a duct configured to connect the blower and the air passage,
wherein the blower is disposed on a side of the pressure-receiving member opposite to an occupant side of the pressure-receiving member,
wherein the pressure-receiving member has a through hole, and
wherein the duct extends through the through hole from the side of the pressure-receiving member opposite to the occupant side of the pressure-receiving member toward the occupant side.

8. The vehicle seat according to claim 7, wherein the side frames are elongate in a direction perpendicular to a lateral direction, and
wherein a position of the blower in a longitudinal direction overlaps a position of the through hole in the longitudinal direction of the side frames.

9. The vehicle seat according to any one of claims 1 to 4, wherein the side frames are elongate in a direction perpendicular to a lateral direction,
wherein the vehicle seat further comprises side frame covers covering at least lateral inner sides of end portions of the side frames on one side in a longitudinal direction, and
wherein a position of the blower in the longitudinal direction is closer, than the side frame covers, to end portions of the side frames on another side in the longitudinal direction.

10. The vehicle seat according to any one of claims 1 to 4, comprising:
a pad configured to cover the seat frame, the pad including an air passage formed therein; and
a duct configured to connect the blower and the air passage,
wherein the side frames are elongate in a direction perpendicular to a lateral direction,
wherein the vehicle seat further comprises side frame covers covering at least lateral inner sides of end portions of the side frames on one side in a longitudinal direction, and
wherein a position of a portion connecting the duct and the air passage in the longitudinal direction is closer, than the side frame covers, to end portions of the side frames on another side in the longitudinal direction.

11. The vehicle seat according to any one of claims 1 to 4, wherein the side frames are elongate in a direction perpendicular to a lateral direction,
wherein the vehicle seat further comprises side frame covers covering at least lateral inner sides of end portions of the side frames on one side in a longitudinal direction, and
wherein a position of the blower in the longitudinal direction overlaps a position of the side frame covers in the longitudinal direction.

12. The vehicle seat according to any one of claims 1 to 4, wherein the blower is mounted directly on the elastic member.

13. The vehicle seat according to claim 1, further comprising a sensor configured to detect an occupant,
wherein the sensor is mounted on an occupant side surface of the pressure-receiving member, and
wherein the blower is mounted on a surface of the pressure-receiving member opposite to the occupant side of the pressure-receiving member.

14. The vehicle seat according to claim 13, wherein the sensor is disposed in a position that overlaps a position of the blower as viewed from the occupant side.

15. The vehicle seat according to claim 13, comprising:
a pad configured to cover the seat frame, the pad including an air passage formed therein; and
a duct configured to connect the blower and the air passage,
wherein the side frames are elongate in a direction perpendicular to a lateral direction, and
wherein a position of a portion connecting the duct and the air passage in a longitudinal direction of the side frames overlaps a position of the sensor in the longitudinal direction of the side frames.

16. The vehicle seat according to claim 15, wherein the portion connecting the duct and the air passage is disposed on one side of a lateral central portion of the pressure-receiving member in the lateral direction, and
wherein the sensor is disposed on another side of the lateral central portion of the pressure-receiving member in the lateral direction.

17. The vehicle seat according to claim 15, wherein the sensor is disposed in a position that does not overlap a position of the duct as viewed from an occupant side.

18. The vehicle seat according to claim 13, wherein the sensor is disposed in a position that does not overlap a position of the blower as viewed from an occupant side.

19. The vehicle seat according to claim 18, wherein a position of the sensor in a lateral direction does not overlap a position of the blower in the lateral direction.

20. The vehicle seat according to claim 18, wherein the side frames are elongate in a direction perpendicular to a lateral direction,
wherein the vehicle seat further comprises side frame covers covering at least lateral inner sides of end portions of the side frames on one side in a longitudinal direction,
wherein a position of the blower in the longitudinal direction overlaps a position of the side frame covers in the longitudinal direction, and
wherein a position of the sensor in the longitudinal direction is closer, than the side frame covers, to end portions of the side frames on another side in the longitudinal direction.

21. The vehicle seat according to any one of claims 13 to 20, wherein the sensor is a pressure sensor.

22. The vehicle seat according to claim 1, wherein the seat frame comprises a pair of connecting frames connecting the left and right side frames, the pair of connecting frames disposed apart from each other in a direction perpendicular to a lateral direction,
wherein the pressure-receiving member comprises:
a plastic member having a shape of a plate as the elastic member; and
a first reinforcing wire configured to bridge the left and right side frames or the pair of connecting frames in a bridging direction, the first reinforcing wire being covered by the plastic member,
wherein the blower is disposed in a position that does not overlap a position of the first reinforcing wire as viewed from an occupant side.

23. The vehicle seat according to claim 22, wherein the first reinforcing wire comprises a bent portion, and
wherein a position of the blower in the bridging direction overlaps a position of the bent portion in the bridging direction.

24. The vehicle seat according to claim 23, comprising a controller configured to control the blower, the controller mounted on the pressure-receiving member,
wherein a position of the controller in the bridging direction overlaps a position of the bent portion in the bridging direction.

25. The vehicle seat according to claim 24, wherein the controller is disposed in a position that does not overlap a position of the first reinforcing wire as viewed from the occupant side.

26. The vehicle seat according to claim 22, wherein the first reinforcing wire includes a first wire and a second wire disposed apart from each other in a direction perpendicular to the bridging direction, and
wherein the blower is disposed between the first wire and the second wire as viewed from the occupant side.

27. The vehicle seat according to claim 22, comprising:
a pad configured to cover the seat frame, the pad including an air passage formed therein; and
a duct configured to connect the blower and the air passage,
wherein the pressure-receiving member comprises a second reinforcing wire extending in a direction perpendicular to the first reinforcing wire as viewed from the occupant side, the second reinforcing wire being covered by the plastic member, and
wherein a position of a portion connecting the duct and the air passage is closer to the second reinforcing wire than to the blower as viewed from the occupant side.

28. The vehicle seat according to claim 22, comprising a controller configured to control the blower, the controller mounted on the pressure-receiving member,
wherein the first reinforcing wire is configured to bridge the pair of connecting frames,
wherein the first reinforcing wire includes a central wire disposed on a lateral central portion of the pressure-receiving member,
wherein the blower is disposed on one side of the central wire in the lateral direction, and
wherein the controller is disposed on another side of the central wire in the lateral direction.

29. The vehicle seat according to claim 28, wherein the first reinforcing wire includes a first side wire disposed on the one side of the central wire in the lateral direction and a second side wire disposed on the another side of the central wire in the lateral direction,
wherein the blower is disposed between the central wire and the first side wire as viewed from the occupant side, and
wherein the controller is disposed between the central wire and the second side wire as viewed from the occupant side.

30. The vehicle seat according to claim 22, comprising:
a pad configured to cover the seat frame, the pad including an air passage formed therein; and
a duct configured to connect the blower and the air passage,
wherein the blower is disposed on a side of the pressure-receiving member opposite to an occupant side of the pressure-receiving member,
wherein the plastic member has a through hole,
wherein the duct extends through the through hole from the side of the pressure-receiving member opposite to the occupant side of the pressure-receiving member toward the occupant side,
wherein the pressure-receiving member comprises a second reinforcing wire extending in a direction perpendicular to the first reinforcing wire as viewed from the occupant side, the second reinforcing wire being covered by the plastic member, and
wherein the second reinforcing wire extends along a part of an edge of the through hole.

31. The vehicle seat according to claim 22, wherein the plastic member comprises a mesh portion having a web-shaped structure.

32. The vehicle seat according to claim 22, wherein the plastic member is made of elastomer.

33. The vehicle seat according to claim 1, wherein the pressure-receiving member comprises:
a blower mounting portion having a shape of a plate and having a first through hole that is engaged with an engaging portion configured to mount the blower to the pressure-receiving member, and
a thick portion provided on at least a part of a periphery of the blower mounting portion in contact with a part of the blower mounting portion, the thick portion protruding at least further, than the blower mounting portion, toward an occupant side.

34. The vehicle seat according to claim 33, comprising a mounting member configured to mount the blower to the pressure-receiving member, the mounting member comprising the engaging portion that is engaged with the first through hole from the occupant side toward a side opposite to the occupant side, and
wherein an end portion of the engaging portion protrudes further, than the blower mounting portion, toward the side opposite to the occupant side.

35. The vehicle seat according to claim 34, wherein the thick portion protrudes further, than the mounting member, toward the occupant side.

36. The vehicle seat according to claim 34, wherein the thick portion includes a first thick portion and a second thick portion,
wherein the first thick portion and the second thick portion protrude further, than the blower mounting portion, toward the side opposite to the occupant side,
wherein the blower mounting portion is disposed between the first thick portion and the second thick portion,
wherein the blower comprises a plate-shaped to-be-mounted portion having a second through hole to which the engaging portion is engaged, and
wherein the to-be-mounted portion is disposed in contact with the first thick portion and the second thick portion on the side opposite to the occupant side with respect to the blower mounting portion.

37. The vehicle seat according to claim 36, wherein the blower comprises a protrusion protruding from the to-be-mounted portion toward the blower mounting portion, the protrusion contacting the blower mounting portion.

38. The vehicle seat according to claim 33, wherein the blower mounting portion is provided on one side in the lateral direction of a lateral central portion of the pressure-receiving member.

39. The vehicle seat according to claim 33, wherein the pressure-receiving member comprises a mesh portion having a web-shaped structure,
wherein the blower mounting portion is disposed inside a mesh of the mesh portion to block the mesh, and
wherein the thick portion is a strand of the mesh portion.

40. The vehicle seat according to claim 39, wherein the pressure-receiving member comprises a frame portion provided to surround the mesh portion,
wherein the blower mounting portion is provided in contact with the frame portion.

41. The vehicle seat according to claim 33, wherein the blower comprises the engaging portion.

42. The vehicle seat according to claim 1, wherein the pressure-receiving member comprises a plurality of linear portions that form a mesh-shaped support surface formed by the elastic member, and
wherein the plurality of linear portions includes a first arc portion formed in a shape of an arc, and a second arc portion formed in a shape of an arc that intersects the first arc portion.

43. The vehicle seat according to claim 42, wherein the plurality of linear portions comprises a straight portion extending straight in a front-rear direction or an up-down direction of the seat.

44. The vehicle seat according to claim 43, wherein the straight portion intersects the first arc portion.

45. The vehicle seat according to claim 44, wherein the straight portion intersects the second arc portion.

46. The vehicle seat according to claim 42, wherein a first center of an arc forming the first arc portion and a second center of an arc forming the second arc portion are located outside of an area occupied by the pressure-receiving member.

47. The vehicle seat according to claim 43, wherein the plurality of linear portions comprises a third arc portion formed in a shape of an arc that intersects the first arc portion and has a third center different from a second center of an arc forming the second arc portion,
wherein the third arc portion intersects the straight portion.

48. The vehicle seat according to claim 42, wherein the pressure-receiving member comprises a pressure sensor configured to detect a seated state of the occupant, and a lateral wire extending in a width direction of the seat,
wherein the lateral wire is disposed in a close proximity of the pressure sensor.

49. The vehicle seat according to claim 48, wherein the pressure-receiving member comprises a longitudinal wire perpendicular to the lateral wire and extending in a front-rear direction or an up-down direction of the seat.

50. The vehicle seat according to claim 49, wherein the pressure sensor is disposed in a close proximity of an intersection of the lateral wire and the longitudinal wire.

51. The vehicle seat according to claim 42, further comprising a duct configured to deliver air from the blower toward the occupant side,
wherein the pressure-receiving member comprises a lateral wire extending in a width direction of the seat, and a longitudinal wire perpendicular to the lateral wire and extending in a front-rear direction or an up-down direction of the seat, and
wherein the pressure-receiving member has a through hole into which the duct is inserted, the through hole formed in a close proximity of an intersection of the lateral wire and the longitudinal wire.
